# EUROPEAN PATENT SPECIFICATION

(11) **EP 3 733 791 B1**
(45) Date of publication and mention of the grant of the patent: **13.08.2025**
(21) Application number: 18896971.1
(22) Date of filing: 21.12.2018
(51) Int. Cl.: C09D 11/38, B41J 2/01, B41M 5/00, C09D 11/322, C09D 11/324, C09D 11/107, C09D 11/326

(54) **AQUEOUS INK FOR INKJET RECORDING**
WÄSSRIGE TINTE FÜR TINTENSTRAHLAUFZEICHNUNG
ENCRE AQUEUSE POUR ENREGISTREMENT AU JET D'ENCRE

(30) Priority: 28.12.2017 JP 2017254828
(43) Date of publication of application: 04.11.2020
(73) Proprietor: Kao Corporation, Chuo-ku Tokyo 103-8210 (JP)
(72) Inventor: MITSUYOSHI, Kaname, Wakayama-shi, Wakayama 640-8580 (JP); EGAWA, Tsuyoshi, Wakayama-shi, Wakayama 640-8580 (JP); NAGANO, Tomohiko, Wakayama-shi, Wakayama 640-8580 (JP)
(74) Representative: Hoffmann Eitle
(86) International application number: PCT/JP2018/047172
(87) International publication number: WO 2019/131479

(56) References cited:
- EP-A1- 3 239 255
- EP-A2- 1 364 997
- WO-A1-2015/111645
- WO-A1-2016/104294
- JP-A- 2009 149 774
- JP-A- 2009 149 774
- JP-A- 2009 155 568
- JP-A- 2012 184 334
- JP-A- 2012 184 334
- JP-A- 2014 227 440
- JP-A- 2014 227 440
- JP-A- 2017 057 359
- JP-A- 2017 155 186
- JP-A- 2017 155 186
- JP-A- 2017 170 851
- US-A1- 2017 267 885

## Description

### FIELD OF THE INVENTION

The present invention relates to a water-based ink for ink-jet printing, and an ink-jet printing method using the water-based ink.

### BACKGROUND OF THE INVENTION

In ink-jet printing methods, droplets of ink are directly ejected onto a printing medium from very fine nozzles and allowed to adhere to the printing medium to form characters or images thereon. The ink-jet printing methods have become rapidly spread because of various advantages such as easiness of full coloration, low cost, capability of using a plain paper as the printing medium, non-contact with printed characters or images, etc.

In recent years, in order to impart good weathering resistance and good water resistance to a printed material, a water-based ink for ink-jet printing which contains a pigment as a colorant and a polymer as a dispersant for the pigment has been used, and various proposals concerning such an ink have been made conventionally.

For example, WO 2017/138186A (Patent Literature 1) discloses an ink-jet printing method in which printing is conducted on a printing medium having an ink receiving layer containing a specific inorganic pigment, starch and a copolymer latex by using an ink containing pigment-containing water-insoluble polymer particles, 10 to 46% by mass of a water-soluble organic solvent having a boiling point of not higher than 230°C, 0 to 5% by mass of a water-soluble organic solvent having a boiling point of not lower than 280°C and 44 to 70% by mass of water. In the Patent Literature 1, it is described that the ink-jet printing method is capable of providing a printed material that has a high image quality and is excellent in color development.

JP 2012-140611A (Patent Literature 2) discloses a water-based ink for ink-jet printing which contains pigment-containing water-insoluble polymer particles and an organic solvent, said water-based ink containing 30 to 60% by weight of diethylene glycol as the organic solvent and 30 to 60% by weight of water, and having a static surface tension of 35 to 55 mN/m as measured at 20°C and a viscosity of 5 to 7 mPa • s as measured at 32°C. In the Patent Literature 2, it is described that the water-based ink is excellent ejection properties (ejection velocity and single droplet-retention properties) and is capable of forming ink dots each having a perfect circular shape. JP 2006-282759A (Patent Literature 3) discloses an ink composition containing water-insoluble vinyl polymer particles that incorporate a pigment therein and render the pigment dispersible in the ink composition, a surfactant and water, in which the surfactant contains acetylene glycol and an ethyleneoxide adduct of acetylene glycol at a specific weight ratio. In the Patent Literature 3, it is also described that the ink composition is excellent in color developability, glossiness, continuous election stability and clogging recoverability. In Examples of the Patent Literature 3, there is described the ink composition that contains 24 to 25% by mass of an organic solvent containing glycerin as a main component. JP 8-41396A (Patent Literature 4) discloses a printing ink prepared by dispersing a pigment in a solvent containing water, glycerin and propylene glycol, in which contents of glycerin and propylene glycol in the ink fall within specific ranges. In the Patent Literature 4, it is described that the ink is excellent in prevention of clogging of nozzles when filling the ink in the nozzles and allowing the nozzles filled with the ink to stand as such. EP 1 364 997 A2 describes an aqueous dispersion comprising particles containing a water-insoluble colorant dispersed in a water-containing medium, wherein the light scattering intensity of the dispersion is at most 30,000 cps when the absorbance peak value of the dispersion in a visible region is regarded as 1. EP 3 239 255 A1 relates to a water-based ink including a pigment, a water-insoluble polymer, an acetylene glycol-based nonionic surfactant (A) having HLB of not less than 0 and not more than 5, a nonionic surfactant (B) having HLB of not less than 6 and not more than 20, a polyether-modified silicone (C) having a kinematic viscosity of not less than 30 mm²/s and not more than 190 mm²/s and an organic solvent (D) in which a weighted mean value of a boiling point of the organic solvent (D) is not lower than 150°C and not higher than 230°C.

JP 2009-155568 A relates to a mixture containing a colorant, polymer particles, a nonionic organic compound having two or more hydroxyl groups, a water-soluble surfactant, and water and an ink-jet recording water-based ink containing an ink-jet recording water dispersion obtained by said method.

JP 2017-155186 A describes a method for producing a water-based ink, the method comprising a step 1 wherein an acetylene glycol-based surfactant and a water-soluble organic solvent are added to the pigment aqueous dispersion in which a pigment is dispersed with a polymer dispersant; and step 2 wherein a pigment aqueous dispersion is obtained, the pigment aqueous dispersion having a water-soluble organic solvent content of 15% by mass or more and 50% by mass or less and a high boiling point organic solvent having a boiling point of 250°C or higher.

JP 2009-149774 relates to a pigment ink composition for inkjet printing comprising a color pigment (A) other than white, a polymeric dispersion agent (B), a self-crosslinkable resin emulsion (C), a surfactant (D), an aqueous medium (E) and a basic compound (F).

JP 2012-184334 describes an ink composition containing at least two kinds of azo pigments, a pigment dispersion resin, water, and a water-soluble solvent as coloring components.

JP 2014-227440 relates to a water-based ink for inkjet recording containing water-insoluble polymer particles containing a pigment and a surfactant, wherein the surfactant has an average number of moles of ethylene oxide added of 0.5 or more and 5.0 or less.

The ink-jet printing methods have been recently employed not only in printing applications for ordinary consumers, but also in commercial and industrial printing applications. In the ink-jet printing methods, it has been required to achieve high productivity and therefore high printing speed. Also, in the ink-jet printing methods, there tends to arise such a problem that when restarting the ink-jet printing after interruption, it is not possible to normally eject the ink. Therefore, it has been demanded to improve ejection stability of the ink upon restarting the ink-jet printing. In addition, in the high-speed printing, it has been required to improve continuous ejection properties and ejection stability upon restarting the ink-jet printing at a higher level than conventionally made.

### SUMMARY OF THE INVENTION

The present invention relates to a water-based ink for ink-jet printing, containing a pigment (A), a carboxy group-containing polymer (B), an organic solvent (C), an acetylene glycol compound (D) and water, in which:
the organic solvent (C) contains an organic solvent (c-1) having a relative permittivity (εᵣ) of not less than 27 and not more than 38 as measured at 23°C;
a content of the organic solvent (C) in the water-based ink is not less than 37% by mass and not more than 55% by mass;
a content of the organic solvent (c-1) in the water-based ink is not less than 33% by mass and not more than 55% by mass;
a mass ratio of the organic solvent (c-1) to the organic solvent (C) [organic solvent (c-1)/organic solvent (C)] is not less than 0.75;
the acetylene glycol compound (D) contains an acetylene glycol (d-1) having an average molar degree of ethoxylation of not less than 4 mol and not more than 15 mol, and an acetylene glycol (d-2) having an average molar degree of ethoxylation of less than 4 mol;
a mass ratio of the acetylene glycol (d-1) to the acetylene glycol (d-2) [acetylene glycol (d-1)/acetylene glycol (d-2)] is not less than 1 and not more than 23; and
a mass ratio of the organic solvent (c-1) to the acetylene glycol compound (D) [organic solvent (c-1)/acetylene glycol compound (D)] is not less than 20 and not more than 40.

### DETAILED DESCRIPTION OF THE INVENTION

The water-based inks and ink-jet printing methods described in the aforementioned Patent Literatures 1 to 4 have failed to satisfy requirements in industrial application fields such as printing with a less amount of ink droplets, ejection stability of the inks after being allowed to stand for a long period of time, etc. For example, in Examples of the Patent Literature 2, the ink was evaluated for intermittent ejection properties thereof for the time period of 120 seconds. In Examples of the Patent Literature 3, the ink was evaluated under the condition that a weight of the ink ejected per a dot was 30 ng. Thus, the techniques described in these Patent Literatures have failed to meet the requirements in industrial printing application fields for improving continuous ejection properties with a less amount of ink droplets ejected and intermittent ejection properties after the elapse of a longer period of time.

The present invention relates to a water-based ink for ink-jet printing which is excellent in ejection stability when used in an ink-jet printing method, and an ink-jet printing method using the water-based ink.

The present inventors have found that the aforementioned conventional problems is solved by a water-based ink for ink-jet printing using a specific organic solvent in combination with a specific acetylene glycol compound.

That is, the present invention relates to the water-based ink for ink-jet printing defined by claim 1 and to the ink-jet printing method defined by claim 12, which correspond to the following [1] and [2].
[1] A water-based ink for ink-jet printing, containing a pigment (A), a carboxy group-containing polymer (B), an organic solvent (C), an acetylene glycol compound (D) and water, in which:
   the organic solvent (C) contains an organic solvent (c-1) having a relative permittivity (εᵣ) of not less than 27 and not more than 38 as measured at 23°C;
      a content of the organic solvent (C) in the water-based ink is not less than 37% by mass and not more than 55% by mass;
      a content of the organic solvent (c-1) in the water-based ink is not less than 33% by mass and not more than 55% by mass;
   a mass ratio of the organic solvent (c-1) to the organic solvent (C) [organic solvent (c-1)/organic solvent (C)] is not less than 0.75;
   the acetylene glycol compound (D) contains an acetylene glycol (d-1) having an average molar degree of ethoxylation of not less than 4 mol and not more than 15 mol, and an acetylene glycol (d-2) having an average molar degree of ethoxylation of less than 4 mol;
   a mass ratio of the acetylene glycol (d-1) to the acetylene glycol (d-2) [acetylene glycol (d-1)/acetylene glycol (d-2)] is not less than 1 and not more than 23; and
   a mass ratio of the organic solvent (c-1) to the acetylene glycol compound (D) [organic solvent (c-1)/acetylene glycol compound (D)] is not less than 20 and not more than 40.
[2] An ink-jet printing method including the step of printing characters or images on a printing medium using the water-based ink described in the above aspect [1], in which an amount of a droplet of the water-based ink ejected is not less than 2 pL and not more than 20 pL.

According to the present invention, there are provided a water-based ink for ink-jet printing which is excellent in ejection stability when used in an ink-jet printing method, and an ink-jet printing method using the water-based ink.

### [Water-Based Ink for Ink-Jet Printing]

The water-based ink for ink-jet printing according to the present invention (hereinafter also referred to merely as a "water-based ink" or an "ink") is characterized by containing a pigment (A), a carboxy group-containing polymer (B), an organic solvent (C), an acetylene glycol compound (D) and water, in which the organic solvent (C) contains an organic solvent (c-1) having a relative permittivity (εᵣ) of not less than 27 and not more than 38 as measured at 23°C; a content of the organic solvent (C) in the water-based ink is not less than 37% by mass and not more than 55% by mass;
a content of the organic solvent (c-1) in the water-based ink is not less than 33% by mass and not more than 55% by mass; a mass ratio of the organic solvent (c-1) to the organic solvent (C) [organic solvent (c-1)/organic solvent (C)] is not less than 0.75; the acetylene glycol compound (D) contains an acetylene glycol (d-1) having an average molar degree of ethoxylation of not less than 4 mol and not more than 15 mol, and an acetylene glycol (d-2) having an average molar degree of ethoxylation of less than 4 mol; a mass ratio of the acetylene glycol (d-1) to the acetylene glycol (d-2) [acetylene glycol (d-1)/acetylene glycol (d-2)] is not less than 1 and not more than 23; and
a mass ratio of the organic solvent (c-1) to the acetylene glycol compound (D) [organic solvent (c-1)/acetylene glycol compound (D)] is not less than 20 and not more than 40.

The term "printing" as used in the present specification means a concept that includes printing or typing for printing characters or images, and the term "printed material" as used herein means a concept that includes printed matters or typed materials on which characters or images are printed.

The term "water-based" as used herein means that water has a largest content among components of a medium contained in the ink.

In addition, the term "ejection stability" as used herein is intended to mean both of intermittent ejection properties and continuous ejection properties, in which the intermittent ejection properties mean ejection properties of the ink when ejecting the ink again after the ink is allowed to remain unejected from ink-jet printing nozzles until a predetermined period of time has elapsed, whereas the continuous ejection properties mean ejection properties of the ink when continuously ejecting the ink from ink-jet printing nozzles in the case of continuously producing printed materials, etc.

The reason why the water-based ink for ink-jet printing according to the present invention is excellent in ejection stability is considered as follows, though it is not clearly determined yet.

That is, the water-based ink of the present invention contains a pigment (A), a carboxy group-containing polymer (B) for dispersing the pigment (A) in the water-based ink, an organic solvent (C) which contains an organic solvent (c-1) having a relative permittivity (εᵣ) of not less than 27 and not more than 38 as measured at 23°C, and an acetylene glycol compound (D).

The acetylene glycol (d-1) contained in the acetylene glycol compound (D) has high affinity to water, whereas the acetylene glycol (d-2) contained therein has high affinity to the organic solvent. In addition, the carboxy group-containing polymer (B) is allowed to absorb onto a surface of the pigment (A) to render the pigment dispersible in the ink.

In this case, it is considered that in the presence of the acetylene glycol compound (D) having high affinity to both of water and the organic solvent, the organic solvent (c-1) contained in the ink in an amount of not less than 33% by mass acts for relaxing electric charges of the carboxy group-containing polymer (B), and further the polymer (B) is appropriately swelled therewith to thereby enhance a steric repulsion of the pigment (A), so that the effect of dispersing the pigment can be effectively exhibited to thereby improve ejection stability and continuous ejection properties of the ink. Furthermore, it is considered that in the presence of the organic solvent (C), the acetylene glycol compound (D) imparts adequate wettability to the ink present within flow paths of an ink-jet printing head, so that the ink can maintain good continuous ejection properties.

### <Water-Based Ink for Ink-Jet Printing>

The water-based ink for ink-jet printing according to the present invention contains the pigment (A), the carboxy group-containing polymer (B), the organic solvent (C), the acetylene glycol compound (D) and water.

In the following, the respective components used in the present invention are explained.

### <Pigment (A)>

In the water-based ink of the present invention, from the viewpoint of improving water resistance and weathering resistance of printed characters or images, the pigment is used as a colorant thereof. The pigment is not particularly limited, and may be used in any of configurations including (i) a self-dispersible pigment, (ii) a pigment dispersed with a water-soluble polymer, (iii) pigment-containing water-insoluble polymer particles, and the like. Of these configurations, the pigment is preferably used in the from of the pigment-containing water-insoluble polymer particles (iii).

The pigment used in the present invention may be either an inorganic pigment or an organic pigment. In addition, the inorganic or organic pigment may be used in combination with an extender pigment, if required.

Examples of the inorganic pigment include carbon blacks, metal oxides, metal sulfides, metal chlorides and the like. Of these inorganic pigments, in particular, carbon blacks are preferably used for black water-based inks. Examples of the carbon blacks include furnace blacks, thermal lamp blacks, acetylene blacks, channel blacks and the like.

Examples of the organic pigment include azo pigments, diazo pigments, phthalocyanine pigments, quinacridone pigments, isoindolinone pigments, dioxazine pigments, perylene pigments, perinone pigments, thioindigo pigments, anthraquinone pigments, quinophthalone pigments and the like. The hue of the organic pigment used in the present invention is not particularly limited, and there may be used any chromatic color pigments having a yellow color, a magenta color, a cyan color, a blue color, a red color, an orange color, a green color, etc.

Specific examples of the preferred organic pigment include one or more pigments selected from the group consisting of commercially available products marketed under the names of C.I. Pigment Yellow, C.I. Pigment Red, C.I. Pigment Orange, C.I. Pigment Violet, C.I. Pigment Blue and C.I. Pigment Green with various product numbers.

Examples of the extender pigment include silica, calcium carbonate, talc and the like.

The aforementioned pigments may be used alone or in the form of a mixture of any two or more thereof.

The content of the pigment in the water-based ink is preferably not less than 1% by mass, more preferably not less than 2% by mass and even more preferably not less than 3% by mass, and is also preferably not more than 15% by mass, more preferably not more than 10% by mass and even more preferably not more than 6% by mass, from the viewpoint of improving ejection stability of the resulting water-based ink. The pigment is preferably used in the form of a water dispersion thereof. The amount of the pigment water dispersion compounded in the water-based ink may be determined such that the content of the pigment in the water-based ink lies within the aforementioned range.

### (i) Self-Dispersible Pigment

The self-dispersible pigment means a pigment onto the surface of which at least one hydrophilic functional group (including an anionic hydrophilic group such as a carboxy group, etc., or a cationic hydrophilic group such as a quaternary ammonium group, etc.) is bonded either directly or through the other atom group such as an alkanediyl group having 1 to 12 carbon atoms, etc., to thereby render the pigment dispersible in an aqueous medium without using a surfactant or a resin. In order to convert the pigment into the self-dispersible pigment, for example, a necessary amount of the hydrophilic functional group may be chemically bonded to the surface of the pigment by an ordinary method.

### (ii) Pigment Dispersed with Water-Soluble Polymer

The pigment dispersed with a water-soluble polymer is preferably used in the form of a water dispersion prepared by dispersing the aforementioned pigment in water with the water-soluble polymer. Examples of the water-soluble polymer include the below-mentioned carboxy group-containing polymers (B), i.e., copolymers of carboxy group-containing monomers such as acrylic acid or methacrylic acid, etc. Examples of commercially available products of the water-soluble polymer used include "JONCRYL 67", "JONCRYL 678", "JONCRYL 683", "JONCRYL 60J", and the like.

The pigment dispersed with the water-soluble polymer is preferably used in the form of a pigment-containing water dispersion prepared by adding the pigment into water in which the water-soluble polymer is dissolved, and dispersing the resulting mixture by applying a shear stress thereto.

### (iii) Pigment-Containing Water-Insoluble Polymer Particles

In the water-based ink of the present invention, from the viewpoint of improving ejection stability thereof, the water-insoluble polymer particles are preferably used in the form of the below-mentioned pigment-containing water-insoluble polymer particles, in particular, in the form of pigment-enclosing (encapsulating) water-insoluble polymer particles (hereinafter also collectively referred to as "pigment-containing polymer particles P"). As the water-insoluble polymer, there may be mentioned the below-mentioned carboxy group-containing polymer (B), i.e., a copolymer of a carboxy group-containing monomer such as acrylic acid and methacrylic acid, and the like.

### <Carboxy Group-Containing Polymer (B)>

The polymer used in the present invention is a carboxy group-containing polymer, and may be either a water-soluble polymer or a water-insoluble polymer. Of these polymers, preferred is a water-insoluble polymer. In addition, the water-insoluble polymer may be used in the form of the pigment-containing polymer particles P or the below-mentioned pigment-free water-insoluble polymer particles Q.

The carboxy groups of the polymer may be partially crosslinked with a crosslinking agent. Even in the case where the carboxy group-containing polymer is a water-soluble polymer, the water-soluble polymer is converted into a water-insoluble polymer though the crosslinking reaction.

### (Water-Insoluble Polymer p)

The water-insoluble polymer p constituting the pigment-containing polymer particles P has not only a function as a dispersant for dispersing the pigment in an aqueous medium and maintaining dispersion stability of the resulting dispersion, but also a function as a fixing agent for fixing the resulting ink on a printing medium.

The term "water-insoluble polymer" as used herein means a polymer that does not become transparent when dispersing the polymer in water. More specifically, the "water-insoluble polymer" as used herein means that when the polymer is dried to a constant weight at 105°C for 2 hours and then dissolved in 100 g of ion-exchanged water at 25°C until reaching a saturated concentration thereof, the solubility in water of the polymer is less than 10 g, preferably not more than 5 g and more preferably not more than 1 g. In the case where the water-insoluble polymer is an anionic polymer, the procedure for judging whether or not the polymer is soluble in water is conducted under such a condition that an anionic group of the polymer is neutralized completely (100%) with sodium hydroxide.

Examples of the polymer used in the present invention include polyesters, polyurethanes, vinyl-based polymers and the like. Among these polymers, preferred are vinyl-based polymers obtained by addition-polymerizing a vinyl monomer (such as a vinyl compound, a vinylidene compound and a vinylene compound), from the viewpoint of improving storage stability of the resulting water-based ink.

The water-insoluble polymer p is preferably a vinyl-based polymer that contains a constitutional unit derived from (p-1) a carboxy group-containing vinyl monomer, and further contains at least one constitutional unit selected from the group consisting of a constitutional unit derived from (p-2) a hydrophobic vinyl monomer and a constitutional unit derived from (p-3) a hydrophilic nonionic monomer, and more preferably a vinyl-based polymer that contains all of the aforementioned three constitutional units.

The water-insoluble polymer p may be produced, for example, by subjecting a monomer mixture containing the carboxy group-containing vinyl monomer (p-1), the hydrophobic vinyl monomer (p-2) and the hydrophilic nonionic monomer (p-3) (hereinafter also referred to merely as a "monomer mixture") to addition polymerization by conventionally known methods.

### [(p-1) Carboxy Group-Containing Vinyl Monomer]

The carboxy group-containing vinyl monomer (p-1) is used as a monomer component of the water-insoluble polymer p upon producing the below-mentioned "water dispersion of the pigment-containing polymer particles P" (hereinafter also referred to merely as a "pigment water dispersion") from the viewpoint of improving dispersion stability of the pigment water dispersion as well as from the viewpoint of improving ejection stability of the resulting water-based ink.

Examples of the carboxy group-containing vinyl monomer include carboxylic acid monomers.

As the carboxylic acid monomers, preferred is at least one compound selected from the group consisting of acrylic acid, methacrylic acid, crotonic acid, itaconic acid, maleic acid, fumaric acid, citraconic acid, 2-methacryloyloxymethylsuccinic acid and the like, and more preferred is at least one compound selected from the group consisting of acrylic acid and methacrylic acid.

### [(p-2) Hydrophobic Vinyl Monomer]

The hydrophobic vinyl monomer (p-2) is used from the viewpoint of improving dispersion stability of the pigment water dispersion as well as from the viewpoint of improving ejection stability of the resulting water-based ink.

Examples of the hydrophobic vinyl monomer (p-2) include at least one monomer selected from the group consisting of a styrene-based monomer, an aromatic group-containing (meth)acrylate and a styrene-based macromonomer.

As the styrene-based monomer, preferred are styrene and 2-methyl styrene, and more preferred is styrene. As the aromatic group-containing (meth)acrylate, preferred are benzyl (meth)acrylate and phenoxyethyl (meth)acrylate, and more preferred is benzyl (meth)acrylate.

The styrene-based macromonomer is a compound having a number-average molecular weight of not less than 500 and not more than 100,000, which contains a polymerizable functional group at one terminal end thereof. The number-average molecular weight of the styrene-based macromonomer is preferably not less than 1,000, more preferably not less than 2,000 and even more preferably not less than 3,000, and is also preferably not more than 10,000, more preferably not more than 9,000 and even more preferably not more than 8,000. Meanwhile, the number-average molecular weight may be measured by gel permeation chromatography using chloroform containing 1 mmol/L of dodecyldimethylamine as a solvent and further using polystyrenes as a reference standard substance.

Examples of the commercially available styrene-based macromonomer include AS-6(S), AN-6(S) and HS-6(S) (tradenames) all available from Toagosei Co., Ltd., and the like.

As the hydrophobic vinyl monomer (p-2), from the same viewpoint as described above, preferred is a combination of at least two kinds of monomers selected from the group consisting of the styrene-based monomer, the aromatic group-containing (meth)acrylate and the styrene-based macromonomer, and more preferred is a combination of styrene or benzyl (meth)acrylate with the styrene-based macromonomer.

### [(p-3) Hydrophilic Nonionic Monomer]

From the viewpoint of improving ejection stability of the resulting water-based ink, the polymer preferably further contains the hydrophilic nonionic monomer (p-3) as a monomer component thereof.

Examples of the hydrophilic nonionic monomer (p-3) include 2-hydroxyethyl (meth)acrylate, 3-hydroxypropyl (meth)acrylate, polyalkylene glycol (meth)acrylates such as polypropylene glycol (n = 2 to 30 in which n represents an average molar number of addition of oxyalkylene groups: hereinafter defined in the same way) (meth)acrylate, polyethylene glycol (n = 2 to 30) (meth) acrylate, etc., alkoxy polyalkylene glycol (meth)acrylates such as methoxy polyethylene glycol (n = 1 to 30) (meth)acrylate, etc., phenoxy (ethylene glycol/propylene glycol copolymer) (n = 1 to 30 in which n for ethylene glycol: n = 1 to 29) (meth)acrylate, and the like. Of these hydrophilic nonionic monomers, preferred are polypropylene glycol (n = 2 to 30) (meth)acrylate and phenoxy (ethylene glycol/propylene glycol copolymer) (meth)acrylate, and more preferred is polypropylene glycol (n = 2 to 30) (meth)acrylate.

Specific examples of commercially available products of the component (p-3) include "NK ESTER M-20G", "NK ESTER M-40G", "NK ESTER M-90G", "NK ESTER M-230G" and the like as products available from Shin-Nakamura Chemical Co., Ltd.; and "BLEMMER PE-90", "BLEMMER PE-200", "BLEMMER PE-350" and the like, "BLEMMER PME-100", "BLEMMER PME-200", "BLEMMER PME-400" and the like, "BLEMMER PP-500", "BLEMMER PP-800", "BLEMMER PP-1000" and the like, "BLEMMER AP-150", "BLEMMER AP-400", "BLEMMER AP-550" and the like, and "BLEMMER 50PEP-300", "BLEMMER 50POEP-800B", "BLEMMER 43PAPE-600B" and the like as products available from NOF Corporation.

The aforementioned monomers (p-1), (p-2) and (p-3) may be respectively used alone or in the form of a mixture of any two or more thereof.

From the same viewpoint as described above, it is preferred that the carboxy group-containing polymer (B) contains a constitutional unit derived from at least one compound selected from the group consisting of acrylic acid and methacrylic acid, and further contains at least one constitutional unit selected from the group consisting of a constitutional unit derived from the hydrophobic vinyl monomer (p-2) and a constitutional unit derived from the hydrophilic nonionic monomer (p-3).

The contents of the aforementioned monomers (p-1), (p-2) and (p-3) in the monomer mixture containing these monomers (contents of non-neutralized components; hereinafter defined in the same way) upon production of the water-insoluble polymer p, or the contents of the respective constitutional units derived from the aforementioned monomers (p-1), (p-2) and (p-3) in the water-insoluble polymer p produced are as follows, from the viewpoint of improving dispersion stability of the pigment water dispersion as well as from the viewpoint of improving ejection stability of the resulting water-based ink.

The content of the carboxy group-containing vinyl monomer (p-1) is preferably not less than 3% by mass, more preferably not less than 5% by mass and even more preferably not less than 8% by mass, and is also preferably not more than 40% by mass, more preferably not more than 30% by mass and even more preferably not more than 25% by mass.

In the case where the hydrophobic vinyl monomer (p-2) is included, the content of the hydrophobic vinyl monomer (p-2) is preferably not less than 15% by mass, more preferably not less than 30% by mass and even more preferably not less than 37% by mass, and is also preferably not more than 84% by mass, more preferably not more than 80% by mass and even more preferably 74% by mass.

In addition, in the case where the styrene-based macromonomer is included as the monomer (p-2), the content of the styrene-based macromonomer is preferably not less than 5% by mass, more preferably not less than 15% by mass and even more preferably not less than not less than 20% by mass, and is also preferably not more than 40% by mass, more preferably not more than 35% by mass and even more preferably not more than 30% by mass.

In the case where the hydrophilic nonionic monomer (p-3) is included, the content of the hydrophilic nonionic monomer (p-3) is preferably not less than 13% by mass, more preferably not less than 15% by mass and even more preferably not less than 18% by mass, and is also preferably not more than 45% by mass, more preferably not more than 40% by mass and even more preferably not more than 38% by mass.

In the case where the monomers (p-1), (p-2) and (p-3) are included, the mass ratio of the component (p-1) to a sum of the component (p-2) and the component (p-3) {component (p-1)/[component (p-2) + component (p-3)]} is preferably not less than 0.03, more preferably not less than 0.05 and even more preferably not less than 0.10, and is also preferably not more than 0.50, more preferably not more than 0.40 and even more preferably not more than 0.30, from the viewpoint of improving dispersion stability of the pigment water dispersion as well as from the viewpoint of improving ejection stability of the resulting water-based ink.

### (Production of Water-Insoluble Polymer p)

The water-insoluble polymer p may be produced by copolymerizing the aforementioned monomer mixture by known polymerization methods. Among the polymerization methods, preferred is a solution polymerization method.

The organic solvent a used in the solution polymerization method is not particularly limited, and is preferably at least one compound selected from the group consisting of ketones having not less than 4 and not more than 8 carbon atoms, alcohols, ethers and esters from the viewpoint of enhancing productivity of the below-mentioned pigment water dispersion. Of these compounds, more preferred are ketones having not less than 4 and not more than 8 carbon atoms, and even more preferred is methyl ethyl ketone.

The polymerization may be carried out in the presence of a polymerization initiator or a polymerization chain transfer agent. As the polymerization initiator, preferred are azo compounds, and more preferred are 2,2'-azobis(2,4-dimethylvaleronitrile) and the like. As the polymerization chain transfer agent, preferred are mercaptans, and more preferred are 2-mercaptoethanol and the like.

The preferred polymerization conditions may vary depending upon the kind of polymerization initiator used, etc. The polymerization temperature is preferably not lower than 50°C and not higher than 90°C, and the polymerization time is preferably not less than 1 hour and not more than 20 hours. Furthermore, the polymerization is preferably conducted in a nitrogen gas atmosphere or an atmosphere of an inert gas such as argon, etc.

After completion of the polymerization reaction, the polymer thus produced may be isolated from the reaction solution by known methods such as reprecipitation and removal of the solvent by distillation, and the like. In addition, the thus obtained polymer may be subjected to reprecipitation, membrane separation, chromatography, extraction, etc., for removing unreacted monomers, etc., therefrom.

The water-insoluble polymer p thus produced is preferably used as such in the form of a polymer solution without removing the solvent used in the polymerization reaction therefrom in order to use the organic solvent a contained therein as the below-mentioned organic solvent b from the viewpoint of enhancing productivity of the pigment water dispersion.

The solid content of the solution of the water-insoluble polymer p is preferably not less than 25% by mass and more preferably not less than 30% by mass, and is also preferably not more than 60% by mass, more preferably not more than 50% by mass and even more preferably not more than 45% by mass, from the viewpoint of enhancing productivity of the pigment water dispersion.

The weight-average molecular weight of the water-insoluble polymer p used in the present invention is preferably not less than 10,000, more preferably not less than 15,000, even more preferably not less than 20,000 and further even more preferably not less than 30,000 from the viewpoint of improving ejection stability of the resulting water-based ink, and is also preferably not more than 150,000 and more preferably not more than 100,000 from the viewpoint of improving dispersion stability of the pigment water dispersion as well as from the viewpoint of improving storage stability and ejection stability of the resulting water-based ink. Meanwhile, the weight-average molecular weight of the water-insoluble polymer p may be measured by the method described in Examples below.

### (Production of Pigment-Containing Polymer Particles P)

The pigment-containing polymer particles P are preferably produced in the form of a water dispersion of the pigment-containing polymer particles P (pigment water dispersion) from the viewpoint of enhancing productivity of the resulting water-based ink.

The pigment water dispersion may be efficiently produced by the process including the following steps (1) and (2).
Step (1): subjecting a mixture containing the water-insoluble polymer p, the organic solvent b, the pigment and water (hereinafter also referred to merely as a "pigment mixture") to dispersion treatment to obtain a dispersion treatment product; and
Step (2): removing the aforementioned organic solvent b from the dispersion treatment product obtained in the step (1) to obtain the pigment water dispersion.

### <Step (1)>

In the step (1), the mixture containing the water-insoluble polymer p, the organic solvent b, the pigment and water (pigment mixture) is subjected to dispersion treatment to obtain the dispersion treatment product.

In the step (1), first, the water-insoluble polymer p, the organic solvent b, the pigment and water, if required together with a neutralizing agent, a surfactant and the like, are preferably mixed with each other to obtain the pigment mixture. The order of addition of the respective components is not particularly limited, and it is preferred that the water-insoluble polymer p, the organic solvent b, the neutralizing agent, water and the pigment are successively added in this order.

### (Organic Solvent b)

The organic solvent b used in the step (1) is not particularly limited, and is preferably selected from aliphatic alcohols having not less than 1 and not more than 3 carbon atoms, ketones having not less than 4 and not more than 8 carbon atoms, ethers, esters and the like. Of these organic solvents, from the viewpoint of improving wettability to the pigment, solubility of the water-insoluble polymer p therein and adsorption of the water-insoluble polymer p to the pigment, more preferred are ketones having not less than 4 and not more than 8 carbon atoms, even more preferred are methyl ethyl ketone and methyl isobutyl ketone, and further even more preferred is methyl ethyl ketone.

When the water-insoluble polymer p is synthesized by a solution polymerization method, the solvent that has been used in the solution polymerization method may be directly used as such in the step (1).

The mass ratio of the water-insoluble polymer p to the organic solvent b [water-insoluble polymer p/organic solvent b] is preferably not less than 0.10, more preferably not less than 0.15 and even more preferably not less than 0.20, and is also preferably not more than 0.70, more preferably not more than 0.60 and even more preferably not more than 0.50, from the viewpoint of improving wettability to the pigment and adsorption of the water-insoluble polymer p to the pigment.

### (Neutralizing Agent)

In the present invention, from the viewpoint of improving dispersion stability of the pigment water dispersion as well as from the viewpoint of improving ejection stability of the resulting water-based ink, there may be used a neutralizing agent. When using the neutralizing agent, the pH value of the pigment water dispersion is preferably controlled to not less than 7 and more preferably not less than 7.5, and is also preferably controlled to not more than 11 and more preferably not more than 9.5.

Examples of the neutralizing agent include hydroxides of alkali metals, ammonia, organic amines and the like.

Specific examples of the hydroxides of alkali metals include lithium hydroxide, sodium hydroxide, potassium hydroxide and cesium hydroxide. Among these hydroxides of alkali metals, preferred is sodium hydroxide.

As the neutralizing agent, from the same viewpoint as described above, preferred are the hydroxides of alkali metals and ammonia, and more preferred is a combination of sodium hydroxide and ammonia. In addition, the water-insoluble polymer p may be previously neutralized.

The neutralizing agent is preferably used in the form of an aqueous neutralizing agent solution from the viewpoint of accelerating neutralization of the polymer in a sufficient and uniform manner. The concentration of the aqueous neutralizing agent solution is preferably not less than 5% by mass and more preferably not less than 10% by mass, and is also preferably not more than 30% by mass and more preferably not more than 25% by mass.

The mass ratio of the aqueous neutralizing agent solution to the organic solvent b [aqueous neutralizing agent solution/organic solvent b] is preferably not less than 0.01, more preferably not less than 0.05 and even more preferably not less than 0.10, and is also preferably not more than 0.50, more preferably not more than 0.30 and even more preferably not more than 0.20, from the viewpoint of promoting adsorption of the water-insoluble polymer p to the pigment and neutralization of the polymer to improve dispersion stability of the pigment dispersion as well as from the viewpoint of improving ejection stability of the resulting water-based ink.

The degree of neutralization of the water-insoluble polymer p is preferably not less than 30 mol%, more preferably not less than 40 mol% and even more preferably not less than 50 mol%, and is also preferably not more than 300 mol%, more preferably not more than 200 mol% and even more preferably not more than 150 mol%, from the viewpoint of improving dispersion stability of the pigment water dispersion as well as from the viewpoint of improving ejection stability of the resulting water-based ink.

The degree of neutralization of the polymer as used therein means the value calculated by dividing a mole equivalent amount of the neutralizing agent by a molar amount of an anionic group in the water-insoluble polymer p.

### (Contents of Respective Components in Pigment Mixture, etc.)

The content of the pigment in the pigment mixture is preferably not less than 10% by mass, more preferably not less than 12% by mass and even more preferably not less than 14% by mass, and is also preferably not more than 30% by mass, more preferably not more than 25% by mass and even more preferably not more than 20% by mass, from the viewpoint of improving dispersion stability of the pigment water dispersion as well as from the viewpoint of improving ejection stability of the resulting water-based ink.

The content of the water-insoluble polymer p in the pigment mixture is preferably not less than 2.0% by mass, more preferably not less than 4.0% by mass and even more preferably not less than 5.0% by mass, and is also preferably not more than 15% by mass, more preferably not more than 10% by mass and even more preferably not more than 8.0% by mass, from the viewpoint of improving dispersion stability of the pigment water dispersion as well as from the viewpoint of improving ejection stability of the resulting water-based ink.

The content of the organic solvent b in the pigment mixture is preferably not less than 10% by mass, more preferably not less than 12% by mass and even more preferably not less than 15% by mass, and is also preferably not more than 35% by mass, more preferably not more than 30% by mass and even more preferably not more than 25% by mass, from the viewpoint of improving wettability to the pigment and adsorption of the water-insoluble polymer p to the pigment.

The content of water in the pigment mixture is preferably not less than 40% by mass, more preferably not less than 45% by mass and even more preferably not less than 50% by mass, and is also preferably not more than 75% by mass, more preferably not more than 70% by mass and even more preferably not more than 65% by mass, from the viewpoint of improving dispersion stability of the pigment water dispersion as well as from the viewpoint of enhancing productivity of the pigment water dispersion.

The mass ratio of the pigment to the water-insoluble polymer p [pigment/water-insoluble polymer p] is preferably not less than 0.4, more preferably not less than 1 and even more preferably not less than 1.5, and is also preferably not more than 9, more preferably not more than 6 and even more preferably not more than 4, from the viewpoint of reducing viscosity of the ink upon evaporation of the solvent therefrom as well as from the viewpoint of improving ejection stability of the resulting water-based ink.

### (Dispersion of Pigment Mixture)

In the step (1), the pigment mixture is further dispersed to obtain the dispersion treatment product. The dispersing method for obtaining the dispersion treatment product is not particularly limited. The pigment particles may be atomized into fine particles having a desired average particle size only by substantial dispersion treatment. However, it is preferred that the pigment mixture is first subjected to preliminary dispersion treatment, and then further to the substantial dispersion treatment by applying a shear stress thereto so as to control the average particle size of the obtained pigment particles to a desired value.

The temperature used in the preliminary dispersion treatment in the step (1) is preferably not lower than 0°C, and is also preferably not higher than 40°C and more preferably not higher than 30°C. The dispersing time is preferably not less than 0.5 hour and more preferably not less than 1 hour, and is also preferably not more than 30 hours and more preferably not more than 10 hours.

Examples of mixing or stirring devices used for the preliminary dispersion treatment include ordinary mixing or stirring devices such as anchor blades, disper blades and the like. Of these mixing or stirring devices, preferred are high-speed stirring mixers.

The temperature used in the substantial dispersion treatment in the step (1) is preferably not lower than 0°C, and is also preferably not higher than 40°C and more preferably not higher than 30°C.

As a means for applying a shear stress to the pigment mixture in the substantial dispersion treatment, there may be used, for example, kneading machines such as roll mills, kneaders, etc., high-pressure homogenizers such as "Microfluidizer" available from Microfluidics Corporation, etc., and media-type dispersers such as paint shakers, beads mills, etc. Examples of the commercially available media-type dispersers include "Ultra Apex Mill" available from Kotobuki Industries Co., Ltd., "Pico Mill" available from Asada Iron Works Co., Ltd., and the like. These devices may be used in combination of any two or more thereof. Among these devices, the high-pressure homogenizers are preferably used from the viewpoint of reducing the particle size of the pigment.

When conducting the substantial dispersion treatment using the high-pressure homogenizer, it is possible to adjust the particle size of the pigment to a desired value by suitably controlling a treating pressure used in the substantial dispersion treatment or the number of passes of the dispersion through the device.

The treating pressure used in the substantial dispersion treatment is not less than 60 MPa, more preferably not less than 100 MPa and even more preferably not less than 130 MPa, and is also preferably not more than 200 MPa, more preferably not more than 180 MPa and even more preferably not more than 170 MPa, from the viewpoint of enhancing productivity and cost efficiency.

The number of passes of the dispersion through the device is preferably not less than 3 and more preferably not less than 5, and is also preferably not more than 30 and more preferably not more than 20.

### <Step (2)>

In the step (2), the organic solvent b is removed from the dispersion treatment product obtained in the step (1) to obtain the pigment water dispersion. The removal of the organic pigment b may be conducted by conventionally known methods.

From the viewpoint of suppressing formation of flocculated products in the course of removing the organic solvent b as well as from the viewpoint of improving dispersion stability of the pigment water dispersion and ejection stability of the resulting water-based ink, it is preferred that water is added to the dispersion treatment product obtained in the step (1) before removing the organic solvent b therefrom to suitably control the mass ratio of the organic solvent b to water (organic solvent b/water).

The mass ratio of the organic solvent b to water (organic solvent b/water) is preferably not less than 0.08 and more preferably not less than 0.10, and is also preferably not more than 0.40 and more preferably not more than 0.20.

The concentration of non-volatile components in the pigment water dispersion (solid content of the pigment water dispersion) after controlling the mass ratio of the organic solvent b to water (organic solvent b/water) is preferably not less than 5% by mass and more preferably not less than 8% by mass, and is also preferably not more than 30% by mass and more preferably not more than 25% by mass, from the viewpoint of suppressing formation of flocculated products in the course of removing the organic solvent b as well as from the viewpoint of enhancing productivity of the pigment water dispersion. Meanwhile, a part of water contained in the aforementioned pigment water dispersion may be removed simultaneously with removal of the organic solvent b.

Examples of the apparatus used for removing the organic solvent b in the step (2) include a batch simple distillation device, a reduced pressure distillation device, a thin film distillation device, a rotary distillation device, a stirring evaporator and the like. Among these apparatuses, from the viewpoint of efficiently removing the organic solvent b, preferred are a rotary distillation device and a stirring evaporator. Among the rotary distillation devices, more preferred is a rotary reduced pressure distillation device such as a rotary evaporator, etc. Whereas, among the stirring evaporators, more preferred are an agitated tank thin film evaporator and the like.

The temperature of the dispersion treatment product upon removal of the organic solvent b may be appropriately selected depending upon the kind of organic solvent b to be removed. The temperature of the dispersion treatment product upon removal of the organic solvent b is preferably not lower than 20°C and more preferably not lower than 25°C, and is also preferably not higher than 80°C and more preferably not higher than 70°C. The pressure of the reaction system upon removal of the organic solvent b is preferably not less than 0.01 MPa and more preferably not less than 0.02 MPa, and is also preferably not more than 0.5 MPa and more preferably not more than 0.2 MPa.

The time required for removal of the organic solvent b is preferably not less than 1 hour and more preferably not less than 2 hours, and is also preferably not more than 24 hours and more preferably not more than 12 hours.

The removal of the organic solvent b is preferably continued until the solid content of the resulting concentrated dispersion reaches preferably not less than 10% by mass and more preferably not less than 20% by mass, and also until the solid content of the concentrated dispersion reaches preferably not more than 35% by mass and more preferably not more than 30% by mass.

The thus obtained concentrated product is preferably subjected to centrifugal separation treatment to separate the concentrated product into a liquid layer portion and a solid portion, thereby recovering the liquid layer portion. The thus recovered liquid layer portion is mainly formed of a dispersion prepared by dispersing the pigment-containing polymer particles P in water, whereas the solid portion is mainly formed of solids that are constituted of coarse particles produced owing to poor dispersion or flocculation of the particles. Therefore, the pigment waster dispersion is obtained from the liquid layer portion.

The organic solvent b is preferably substantially completely removed from the thus obtained pigment water dispersion. However, the residual organic solvent b may be present in the pigment water dispersion unless the objects and advantageous effects of the present invention are adversely affected by the residual organic solvent. The content of the residual organic solvent b in the resulting pigment water dispersion is preferably not more than 0.1% by mass and more preferably not more than 0.01% by mass.

The concentration of the non-volatile components in the resulting pigment water dispersion of the pigment-containing polymer particles P (solid content of the pigment water dispersion) is preferably not less than 10% by mass and more preferably not less than 15% by mass, and is also preferably not more than 30% by mass and more preferably not more than 25% by mass, from the viewpoint of improving dispersion stability of the pigment water dispersion as well as from the viewpoint of facilitating preparation of the water-based ink.

In the thus-obtained pigment water dispersion of the pigment-containing polymer particles P, solid components formed of the pigment and the water-insoluble polymer p are dispersed in a dispersing medium containing water as a main medium.

The average particle size of the pigment-containing polymer particles P in the pigment water dispersion is preferably not less than 40 nm, more preferably not less than 60 nm and even more preferably not less than 80 nm, and is also preferably not more than 150 nm and more preferably not more than 140 nm, from the viewpoint of improving dispersion stability of the pigment water dispersion as well as from the viewpoint of improving ejection stability of the resulting water-based ink.

Meanwhile, the average particle size of the pigment-containing polymer particles P may be measured by the method described in Examples below.

In addition, the average particle size of the pigment-containing polymer particles P in the water-based ink using the pigment-containing polymer particles P is the same as the average particle size of the pigment-containing polymer particles P in the pigment water dispersion, and the preferred range of the average particle size of the pigment-containing polymer particles P in the water-based ink is also the same as that of the average particle size of the pigment-containing polymer particles P in the pigment water dispersion.

### (Content of Pigment-Containing Polymer Particles P)

In the case where the pigment-containing polymer particles P are used as the pigment, the content of the pigment-containing polymer particles P in the water-based ink is preferably not less than 1.4% by mass, more preferably not less than 2.8% by mass and even more preferably not less than 4.2% by mass, and is also preferably not more than 21% by mass, more preferably not more than 14% by mass and even more preferably not more than 8.4% by mass, from the viewpoint of improving ejection stability of the resulting water-based ink.

### (Content of Water-Insoluble Polymer p)

In the case where the pigment-containing polymer particles P are used, the content of the water-insoluble polymer p in the water-based ink is preferably not less than 0.4% by mass, more preferably not less than 0.8% by mass and even more preferably not less than 1.2% by mass, and is also preferably not more than 6% by mass, more preferably not more than 4% by mass and even more preferably not more than 2.4% by mass, from the viewpoint of improving ejection stability of the resulting water-based ink.

### [Water-Insoluble Polymer Particles Q]

The water-based ink of the present invention may also contain pigment-free water-insoluble polymer particles Q from the viewpoint of improving fixing properties of the water-based ink onto a printing medium as well as from the viewpoint of improving ejection stability of the resulting water-based ink.

The water-insoluble polymer particles Q may contain a constitutional unit derived from (q-1) (meth)acrylic acid and a constitutional unit derived from (q-2) a (meth)acrylic acid ester.

As the monomer (q-1), there may be mentioned acrylic acid and methacrylic acid. Of these compounds, preferred is methacrylic acid. As the monomer (q-2), preferred are (meth)acrylic acid esters containing an alkyl group preferably having 1 to 10 carbon atoms and more preferably 1 to 8 carbon atoms, and more preferred are methyl methacrylate and 2-ethylhexyl acrylate.

As the water-insoluble polymer particles Q, there may be used those polymer particles that are produced by copolymerizing a mixture containing the monomer (q-1) and the monomer (q-2) by known emulsion polymerization methods, etc., similarly to production of the aforementioned water-insoluble polymer p. Alternatively, commercially available products may also be used as the water-insoluble polymer particles Q.

Examples of the commercially available products of the dispersion of the water-insoluble polymer particles Q include dispersions of acrylic resins such as "Neocryl A1127" (anionic self-crosslinkable water-based acrylic resin) available from DSM NeoResins, Inc., and "JONCRYL 390" available from BASF Japan, Ltd.; styrene-acrylic resins such as "JONCRYL 7100", "JONCRYL 737" and "JONCRYL 538" all available from BASF Japan, Ltd., etc.; and the like.

The weight-average molecular weight of the water-insoluble polymer particles Q is preferably not less than 100,000, more preferably not less than 200,000 and even more preferably not less than 500,000, and is also preferably not more than 2,500,000 and more preferably not more than 1,000,000.

The average particle size of the water-insoluble polymer particles Q in the water-based ink is preferably not less than 10 nm, more preferably not less than 30 nm and even more preferably not less than 50 nm, and is also preferably not more than 300 nm, more preferably not more than 200 nm and even more preferably not more than 150 nm, from the viewpoint of improving ejection stability of the resulting water-based ink.

Meanwhile, the weight-average molecular weight and average particle size of the water-insoluble polymer particles Q may be measured by the methods described in Examples below.

In the case of using the water-insoluble polymer particles Q, the content of the water-insoluble polymer particles Q in the water-based ink is preferably not more than 4% by mass, more preferably not more than 3.5% by mass and even more preferably not more than 3% by mass, and is also preferably not less than 0.5% by mass, more preferably not less than 1% by mass and even more preferably not less than 1.5% by mass, from the viewpoint of improving fixing properties of the water-based ink onto a printing medium.

### <Organic Solvent (C)>

The water-based ink of the present invention contains an organic solvent (C) from the viewpoint of improving ejection stability of the resulting water-based ink.

The organic solvent (C) contains an organic solvent (c-1) having a relative permittivity (εᵣ) of not less than 27 and not more than 38 as measured at 23°C.

The relative permittivity (εᵣ) is an index indicating a polarity of a solvent and is defined by a ratio of a permittivity (ε) of the solvent to a permittivity (ε₀) of vacuum (ε/ε₀), which may be measured according to ASTM-150 by using a commercially available measuring apparatus, for example, a permittivity measuring device "HP E5050A" available from Hewlett Packard Co., etc. In addition, the permittivity values of solvents are described in "Handbook of Chemistry, Pure Chemistry, Revised 4th Edition (II)" published by Maruzen Publishing Co., Ltd., "Solvent Handbook, 1st Edition" published by Kodansha Scientific Ltd., etc., and therefore reference should be made to these literatures.

As the value of the relative permittivity (εᵣ) of the solvent is increased, the polarity of the solvent becomes higher. The relative permittivity (εᵣ) of the organic solvent (c-1) as measured at 23°C is preferably not less than 27, more preferably not less than 27.5 and even more preferably not less than 28, and is also preferably not more than 36.5, more preferably not more than 36 and even more preferably not more than 35.5.

The content of the organic solvent (c-1) having a relative permittivity (εᵣ) of not less than 27 and not more than 38 as measured at 23°C in the water-based ink is not less than 33% by mass and preferably not less than 34% by mass, and is also not more than 55% by mass, preferably not more than 53% by mass, more preferably not more than 52% by mass and even more preferably not more than 48% by mass, from the viewpoint of improving ejection stability of the resulting water-based ink.

The mass ratio of the organic solvent (c-1) to the organic solvent (C) [organic solvent (c-1)/organic solvent (C)] is not less than 0.75, preferably not less than 0.8, more preferably not less than 0.9 and even more preferably not less than 0.95 from the viewpoint of improving ejection stability of the resulting water-based ink.

From the viewpoint of improving drying properties of the ink when printed on a low-water absorbing printing medium, the organic solvent (C) preferably contains one or more organic solvents each having a boiling point of not lower than 150°C. In the case where two or more organic solvents are used as the organic solvent (C), it is preferred that the weighted mean value of boiling points of the two or more organic solvents which are weighted by contents (% by mass) thereof is not lower than 150°C.

The weighted mean value of the boiling point of the organic solvent (C) is preferably not lower than 160°C and more preferably not lower than 170°C, and is also preferably not higher than 255°C, more preferably not higher than 250°C and even more preferably not higher than 248°C, from the viewpoint of preventing drying of the ink in ink-jet nozzles as well as from the viewpoint of improving ejection stability of the resulting water-based ink.

Examples of the compound used as the organic solvent (C) include a polyhydric alcohol, a polyhydric alcohol alkyl ether, a nitrogen-containing heterocyclic compound, an amide, an amine, a sulfur-containing compound and the like. Among these compounds, from the viewpoint of improving ejection stability of the resulting water-based ink, preferred is the polyhydric alcohol.

As the polyhydric alcohol, preferred is at least one compound selected from the group consisting of dihydric alcohols and trihydric alcohols from the viewpoint of improving ejection stability of the resulting water-based ink. Examples of the polyhydric alcohol include ethylene glycol, diethylene glycol, polyethylene glycol, propylene glycol, dipropylene glycol, polypropylene glycol, 1,3-propanediol, 1,3-butanediol, 1,4-butanediol, 3-methyl-1,3-butanediol, 1,5-pentanediol, 1,6-hexanediol, 2-methyl-2,4-pentanediol, 1,2,6-hexanetriol, 1,2,4-butanetriol, 1,2,3-butanetriol, petriol and the like.

From the same viewpoint as described above, the organic solvent (c-1) having a relative permittivity (εᵣ) of not less than 27 and not more than 38 as measured at 23°C preferably contains a glycol. The number of carbon atoms of the glycol is preferably not less than 2 and more preferably not less than 3, and is also preferably not more than 8, more preferably not more than 6 and even more preferably not more than 4. As the organic solvent (c-1), preferred is at least one compound selected from the group consisting of propylene glycol (εᵣ: 29.9; boiling point (b.p.): 188°C), 1,3-propanediol (εᵣ: 37.9; b.p.: 210°C), 1,5-pentanediol (εᵣ: 28.2; b.p.: 242°C) and diethylene glycol (εᵣ: 34.4; b.p.: 244°C), more preferred is at least one compound selected from the group consisting of propylene glycol and diethylene glycol, and even more preferred is propylene glycol.

The content of the organic solvent (C) in the water-based ink is not less than 37% by mass, and is also not more than 55% by mass, even more preferably not more than 51% by mass, further even more preferably not more than 49% by mass, still further even more preferably not more than 47% by mass and furthermore preferably not more than 44% by mass, from the viewpoint of improving ejection stability of the resulting water-based ink.

### <Acetylene Glycol Compound (D)>

In the present invention, the water-based ink contains an acetylene glycol (d-1) having an average molar degree of ethoxylation (hereinafter also referred to as an "average molar number of addition of EO") of not less than 4 mol and not more than 15 mol, and an acetylene glycol (d-2) having an average molar degree of ethoxylation of less than 4 mol, from the viewpoint of improving ejection stability of the resulting water-based ink. More specifically, the water-based ink of the present invention is such a water-based ink that is obtained by compounding the pigment (A), the carboxy group-containing polymer (B) and the organic solvent (C) with the acetylene glycol (d-1) and the acetylene glycol (d-2).

### (Acetylene Glycol (d-1))

The average molar number of addition of EO of the acetylene glycol (d-1) is not less than 4 mol, preferably not less than 6 mol, more preferably not less than 7 mol and even more preferably not less than 9 mol, and is also not more than 15 mol, preferably not more than 13 mol and more preferably not more than 11 mol.

As the acetylene glycol (d-1), preferred is at least one compound selected from the group consisting of an EO adduct of
2,4,7,9-tetramethyl-5-decyne-4,7-diol, an EO adduct of
3,6-dimethyl-4-octyne-3,6-diol, 2,5-dimethyl-3-hexyne-2,5-diol, and an EO adduct of 2,5,8,11-tetramethyl-6-dodecyne-5,8-diol, more preferred is at least one compound selected from the group consisting of an EO adduct of
2,4,7,9-tetramethyl-5-decyne-4,7-diol, an EO adduct of
3,6-dimethyl-4-octyne-3,6-diol and an EO adduct of
2,5-dimethyl-3-hexyne-2,5-diol, and even more preferred is an EO adduct of
2,4,7,9-tetramethyl-5-decyne-4,7-diol.

Examples of commercially available products of the EO adduct of 2,4,7,9-tetramethyl-5-decyne-4,7-diol include "SURFYNOL 465" (average molar number of addition of EO: 10; active ingredient content: 100% by mass) and "SURFYNOL 485" (average molar number of addition of EO: 30; active ingredient content: 100% by mass) both available from Air Products & Chemicals, Inc.; "ACETYLENOL E81" (average molar number of addition of EO: 8.1), "ACETYLENOL E 100" (average molar number of addition of EO: 10) and "ACETYLENOL E200" (average molar number of addition of EO: 20) all available from Kawaken Fine Chemicals Co., Ltd.; and the like.

### (Acetylene Glycol (d-2))

The water-based ink of the present invention also contains the acetylene glycol (d-2) having an average molar number of addition of ethyleneoxide of less than 4 mol from the viewpoint of improving ejection stability of the resulting water-based ink.

The average molar number of addition of EO of the acetylene glycol (d-2) is preferably not more than 2 mol, more preferably not more than 1.5 mol, even more preferably not more than 1 mol and further even more preferably 0 mol from the viewpoint of improving ejection stability of the resulting water-based ink.

The difference between the average molar number of addition of EO of the acetylene glycol (d-1) and the average molar number of addition of EO of the acetylene glycol (d-2) is preferably not less than 4 mol and more preferably not less than 7 mol, and is also preferably not more than 13, from the viewpoint of improving ejection stability of the resulting water-based ink.

The acetylene glycol (d-2) is preferably at least one compound selected from the group consisting of 2,4,7,9-tetramethyl-5-decyne-4,7-diol, 3,6-dimethyl-4-octyne-3,6-diol, 2,5-dimethyl-3-hexyne-2,5-diol, 2,5,8,11-tetramethyl-6-dodecyne-5,8-diol, and EO adducts of these compounds, more preferably at least one compound selected from the group consisting of 2,4,7,9-tetramethyl-5-decyne-4,7-diol, 3,6-dimethyl-4-octyne-3,6-diol, 2,5-dimethyl-3-hexyne-2,5-diol and EO adducts of these compounds, and even more preferably 2,4,7,9-tetramethyl-5-decyne-4,7-diol or an EO adduct of 2,4,7,9-tetramethyl-5-decyne-4,7-diol.

2,4,7,9-Tetramethyl-5-decyne-4,7-diol, 3,6-dimethyl-4-octyne-3,6-diol and 2,5-dimethyl-3-hexyne-2,5-diol may be synthesized by reacting acetylene with a ketone or an aldehyde corresponding to the aimed acetylene glycol, and may be obtained, for example, by the method described in Takehiko Fujimoto, a fully revised edition "New Introduction to Surfactants" published by Sanyo Chemical Industries, Ltd., 1992, pp. 94-107, etc.

The EO adduct of the acetylene glycol may be produced by subjecting the acetylene glycol obtained by the aforementioned method to addition reaction with EO such that the number of EO groups added is adjusted to a desired value.

Specific examples of commercially available products of 2,4,7,9-tetramethyl-5-decyne-4,7-diol include "SURFYNOL 104" (average molar number of addition of EO: 0 mol; active ingredient content: 100% by mass) and "SURFYNOL 104PG-50" (a 50% by mass propylene glycol-diluted solution of 2,4,7,9-tetramethyl-5-decyne-4,7-diol; average molar number of addition of EO: 0 mol) both available from Air Products & Chemicals, Inc. In addition, specific examples of commercially available products of the EO adduct of 2,4,7,9-tetramethyl-5-decyne-4,7-diol include "SURFYNOL 420" (average molar number of addition of EO: 1.3; active ingredient content: 100% by mass) available from Air Products & Chemicals, Inc.; "ACETYLENOL E13T" (average molar number of addition of EO: 1.3) available from Kawaken Fine Chemicals Co., Ltd.; and the like.

The content of the acetylene glycol compound (D) in the water-based ink is preferably not less than 0.5% by mass, more preferably not less than 0.7% by mass, even more preferably not less than 0.9% by mass and further even more preferably not less than 1.0% by mass, and is also preferably not more than 3% by mass, more preferably not more than 2.8% by mass, even more preferably not more than 2.5% by mass and further even more preferably not more than 2.2% by mass, from the viewpoint of improving ejection stability of the resulting water-based ink. The content of the acetylene glycol compound (D) corresponds to an amount of the acetylene glycol compound (D) compounded upon preparation of the water-based ink.

From the same viewpoint as described above, the content of the acetylene glycol (d-1) in the water-based ink is preferably not less than 0.4% by mass, more preferably not less than 0.6% by mass and even more preferably not less than 0.8% by mass, and is also preferably not more than 4% by mass, more preferably not more than 3% by mass, even more preferably not more than 2.5% by mass and further even more preferably not more than 2% by mass.

From the same viewpoint as described above, the content of the acetylene glycol (d-2) in the water-based ink is preferably not less than 0.02% by mass, more preferably not less than 0.05% by mass, even more preferably not less than 0.1% by mass and further even more preferably not less than 0.15% by mass, and is also preferably not more than 3% by mass, more preferably not more than 2% by mass, even more preferably not more than 1.5% by mass, further even more preferably not more than 1% by mass and still further even more preferably not more than 0.5% by mass.

### (Total Content of Acetylene Glycols (d-1) and (d-2))

From the same viewpoint as described above, the total content of the acetylene glycols (d-1) and (d-2) in the water-based ink is preferably not less than 1.02% by mass, more preferably not less than 1.05% by mass, even more preferably not less than 1.1% by mass and further even more preferably not less than 1.15% by mass, and is also preferably not more than 4% by mass, more preferably not more than 3% by mass, even more preferably not more than 2.5% by mass, further even more preferably not more than 2% by mass and still further even more preferably not more than 1.5% by mass.

### (Mass Ratio of [Acetylene Glycol (d-1)/Acetylene Glycol (d-2)])

The mass ratio of the acetylene glycol (d-1) to the acetylene glycol (d-2) [acetylene glycol (d-1)/acetylene glycol (d-2)] is not less than 1, even more preferably not less than 1.5 and further even more preferably not less than 2, and is also not more than 23, even more preferably not more than 15 and further even more preferably not more than 12, from the viewpoint of improving ejection stability of the resulting water-based ink.

The mass ratio of the organic solvent (c-1) to the acetylene glycol compound (D) [organic solvent (c-1)/acetylene glycol compound (D)] is not less than 20, further even more preferably not less than 22, still further even more preferably not less than 25 and furthermore preferably not less than 28, and is also not more than 40, more preferably not more than 38, even more preferably not more than 36 and further even more preferably not more than 34, from the viewpoint of improving ejection stability of the resulting water-based ink.

### <Other Components>

The water-based ink of the present invention may also contain various additives that may be usually used in inks, such as a surfactant other than the aforementioned surfactants, a wetting agent, a penetrant, a dispersant, a viscosity controller, a defoaming agent, an antiseptic agent, a mildew-proof agent, a rust preventive and the like, unless the objects and advantageous effects of the present invention are adversely affected by inclusion thereof.

### [Process for Producing Water-Based Ink]

The water-based ink of the present invention may be produced by mixing a water dispersion of the pigment (A), the carboxy group-containing polymer (B), the organic solvent (C), the acetylene glycol compound (D) and water, if required together with the water-insoluble polymer particles Q, the organic solvent (C), etc., and then stirring the resulting mixture.

### (Content of Water)

The content of water in the water-based ink is preferably not less than 35% by mass, more preferably not less than 40% by mass and even more preferably not less than 45% by mass, and is also preferably not more than 60% by mass, more preferably not more than 58% by mass and even more preferably not more than 55% by mass, from the viewpoint of improving ejection stability of the resulting water-based ink. In the case where the other components than the pigment, the water-insoluble polymer particles Q, the organic solvent (C) and water are incorporated into the water-based ink, a part of the content of water in the ink may be substituted with those of the other components to incorporate the other components into the ink.

### [Properties of Water-Based Ink]

The viscosity of the water-based ink as measured at 32°C is preferably not less than 2.0 mPa • s, more preferably not less than 3.0 mPa • s and even more preferably not less than 5.0 mPa • s, and is also preferably not more than 12 mPa • s, more preferably not more than 9.0 mPa • s and even more preferably not more than 7.0 mPa • s, from the viewpoint of improving ejection stability of the resulting water-based ink.

The pH value of the water-based ink is preferably not less than 7.0, more preferably not less than 8.0 and even more preferably not less than 8.5 from the viewpoint of improving ejection stability of the resulting water-based ink, and is also preferably not more than 11.0, more preferably not more than 10.0 and even more preferably 9.5 from the viewpoint of improving the resistance of members to the ink and suppressing skin irritation.

### [Ink-Jet Printing Method]

The ink-jet printing method of the present invention is such an ink-jet printing method including the step of printing characters or images on a printing medium using the water-based ink obtained above, and is characterized in that an amount of a droplet of the water-based ink ejected is not less than 2 pL and not more than 20 pL.

### (Printing Medium)

In accordance with the ink-jet printing method of the present invention, it is possible to print high-quality characters or images not only on a high-water absorbing plain paper, but also on a low-water absorbing coated paper and a resin film.

Examples of the coated paper include a versatile glossy coated paper "OK Topcoat Plus" (basis weight: 104.7 g/m²; water absorption as measured by contacting the printing medium with pure water for 100 milliseconds (hereinafter defined in the same way): 4.9 g/m²) available from Oji Paper Co., Ltd., a multi-color foam glossy coated paper (104.7 g/m²; water absorption: 5.2 g/m²) available from Oji Paper Co., Ltd., "UPM Finesse Gloss" (115 g/m²; water absorption: 3.1 g/m²) available from UPM, and the like.

As the resin film, there may be used a transparent synthetic resin film such as a polyester film, a polypropylene film, a polyethylene film, a nylon film and the like. These films may be in the form of either a biaxially oriented film, a monoaxially oriented film or a non-oriented film. Among these films, more preferred are a polyester film such as a corona discharge-treated polyethylene terephthalate (PET) film, etc., and an oriented polypropylene film such as a corona discharge-treated biaxially oriented polypropylene (OPP) film, etc.

Examples of commercially available products of the resin film include "LUMIRROR T60" (PET) available from Toray Industries, Inc., "TAIKO FE2001" (corona discharge-treated PET) available from Futamura Chemical Co, Ltd., "TAIKO FOR-AQ" (corona discharge-treated OPP) available from Futamura Chemical Co, Ltd., "PVC80B P" (polyvinyl chloride) available from Lintec Corporation, "KINATH KEE 70CA" (polyethylene) available from Lintec Corporation, "YUPO SG90 PAT1" (PP) available from Lintec Corporation, and the like.

### (Printing Method)

In the present invention, any of a serial type print head and a line type print head may be used. Of these print heads, preferred is a line type print head. The line type print head is capable of printing characters or images, etc., by one pass method.

Ejection of the ink droplets is preferably conducted by a piezoelectric method, but may also be conducted by a thermal method.

The voltage applied to the print head is preferably not less than 5 V, more preferably not less than 10 V and even more preferably not less than 15 V, and is also preferably not more than 40 V, more preferably not more than 35 V and even more preferably not more than 30 V, from the viewpoint of improving efficiency of high-speed printing, and the like.

The drive frequency of the print head is preferably not less than 2 kHz, more preferably not less than 5 kHz and even more preferably not less than 8 kHz, and is also preferably not more than 80 kHz, more preferably not more than 70 kHz and even more preferably not more than 60 kHz, from the viewpoint of improving efficiency of high-speed printing, and the like.

### (Printing Conditions, etc.)

The amount of droplets of the water-based ink ejected is preferably not less than 2 pL, more preferably not less than 4 pL, even more preferably not less than 6 pL and further even more preferably not less than 8 pL, and is also preferably not more than 20 pL, more preferably not more than 18 pL and even more preferably not more than 16 pL, as calculated per one ink droplet ejected, from the viewpoint of improving ejection stability of the resulting water-based ink.

The print head resolution is preferably not less than 400 dpi (dot(s)/inch), more preferably not less than 500 dpi and even more preferably not less than 550 dpi.

The inside temperature of the print head, preferably the inside temperature of the line type print head, upon printing is preferably controlled to not lower than 20°C, more preferably not lower than 25°C and even more preferably not lower than 30°C, and is also preferably controlled to not higher than 45°C, more preferably not higher than 40°C and even more preferably not higher than 35°C, from the viewpoint of reducing viscosity of the resulting water-based ink and improving continuous ejection properties of the ink.

The printing speed, in terms of a transportation speed of the printing medium in the direction in which the printing medium is moved when printed, is usually not less than 5 m/min, preferably not less than 10 m/min, more preferably not less than 20 m/min and even more preferably not less than 30 m/min from the viewpoint of enhancing productivity of the printed material, and is also preferably not more than 75 m/min from the viewpoint of improving operability upon printing.

### EXAMPLES

In the following Production Examples, Examples and Comparative Examples, the "part(s)" and "%" indicate "part(s) by mass" and "% by mass", respectively, unless otherwise specified. Meanwhile, the weight-average molecular weight of the water-insoluble polymer, the average particle size of the pigment-containing polymer particles, the solid content of the pigment water dispersion and the water absorption of the printing medium were measured by the following methods.

### (1) Measurement of Weight-Average Molecular Weight of Water-Insoluble Polymer

The weight-average molecular weight of the polymer was measured by gel permeation chromatography [GPC apparatus: "HLC-8120GPC" available from Tosoh Corporation; columns: "TSK-GEL, α-M" x 2 available from Tosoh Corporation; flow rate: 1 mL/min] using a solution prepared by dissolving phosphoric acid and lithium bromide in N,Ndimethylformamide such that concentrations of phosphoric acid and lithium bromide in the resulting solution were 60 mmol/L and 50 mmol/L, respectively, as an eluent, and using monodisperse polystyrenes having known molecular weights as a reference standard substance.

### (2) Measurement of Average Particle Sizes of Pigment-Containing Polymer Particles P and Water-Insoluble Polymer Particles Q

The particles were subjected to cumulant analysis using a laser particle analyzing system "ELSZ-1000" available from Otsuka Electrics Co., Ltd., to measure an average particle size thereof. The measurement was conducted using a dispersion liquid prepared by diluting the dispersion to be measured with water so as to adjust a concentration of the particles in the dispersion liquid to 5 x 10⁻³% by mass (in terms of a solid content thereof). Also, the measurement was conducted under the conditions including a temperature of 25°C, an angle between incident light and detector of 165° and a cumulative number of 100 times, and a refractive index of water (1.333) was input to the analyzing system as a refractive index of the dispersing medium. The thus measured cumulant average particle size of the particles was defined as an average particle size of the particles.

### (3) Measurement of Solid Content of Pigment Water Dispersion

Sodium sulfate dried to constant weight in a desiccator was weighed and charged in an amount of 10.0 g into a 30 mL polypropylene container (ϕ: 40 mm; height: 30 mm), and about 1.0 g of a sample to be measured was added to the container. The contents of the container were mixed and then accurately weighed. The resulting mixture was maintained in the container at 105°C for 2 hours to remove volatile components therefrom, and further allowed to stand in a desiccator for 15 minutes to measure a mass thereof. The mass of the sample after removing the volatile components therefrom was regarded as a mass of solids therein. The solid content of the sample was calculated by dividing the mass of the solids by the mass of the sample initially added.

### (4) Measurement of Relative Permittivity (εᵣ) of Organic Solvent (C)

The relative permittivity (εᵣ) of the organic solvent (C) was measured under the environmental conditions including a temperature of 23°C by a liquid permittivity meter "MODEL 871" available from Nihon Rufuto Co., Ltd.

### Production Example 1 (Production of Water-Insoluble Polymer p Solution)

The monomers, the solvent (methyl ethyl ketone) and the polymerization chain transfer agent (2-mercaptoethanol) as shown in the column "Initially Charged Monomer Solution" in Table 1 were charged into a reaction vessel equipped with two dropping funnels 1 and 2 and mixed with each other, and an inside atmosphere of the reaction vessel was replaced with nitrogen gas, thereby obtaining an initially charged monomer solution.

On the other hand, the monomers, the solvent, the polymerization initiator "V-65" (tradename; 2,2'-azobis(2,4-dimethylvaleronitrile)) available from FUJIFILM Wako Pure Chemical Corporation and the polymerization chain transfer agent as shown in the column "Dropping Monomer Solution 1" in Table 1 were mixed with each other to obtain a dropping monomer solution 1. The resulting dropping monomer solution 1 was charged into the dropping funnel 1, and an inside atmosphere of the dropping funnel 1 was replaced with nitrogen gas.

In addition, the monomers, the solvent, the polymerization initiator and the polymerization chain transfer agent as shown in the column "Dropping Monomer Solution 2" in Table 1 were mixed with each other to obtain a dropping monomer solution 2. The resulting dropping monomer solution 2 was charged into the dropping funnel 2, and an inside atmosphere of the dropping funnel 2 was replaced with nitrogen gas.

In a nitrogen atmosphere, the initially charged monomer solution in the reaction vessel was maintained at 77°C while stirring, and the dropping monomer solution 1 in the dropping funnel 1 was gradually added dropwise to the reaction vessel over 3 hours. Next, the dropping monomer solution 2 in the dropping funnel 2 was gradually added dropwise to the reaction vessel over 2 hours. After completion of the dropwise addition, the resulting mixed solution in the reaction vessel was stirred at 77°C for 0.5 hour.

Then, a polymerization initiator solution prepared by dissolving 0.6 part of the aforementioned polymerization initiator "V-65" in 27.0 parts of methyl ethyl ketone was added to the mixed solution, and the resulting reaction solution was aged at 77°C for 1 hour while stirring. The aforementioned procedure including the preparation and addition of the polymerization initiator solution and the aging of the reaction solution was repeated five more times. Then, after maintaining the reaction solution in the reaction vessel at 80°C for 1 hour, methyl ethyl ketone was added thereto, thereby obtaining a water-insoluble polymer p solution (solid content: 40.8%).

The weight-average molecular weights of the thus obtained water-insoluble polymer p was 52,700. In addition, the resulting water-insoluble polymer p was dried to constant weight at 105°C for 2 hours and then dissolved in water such that the obtained solution had a concentration of 5 x 10⁻³% by mass (in terms of a solid content thereof). At this time, it was confirmed that the water-insoluble polymer p had an average particle size of 89 nm.

Meanwhile, the details of the monomers as shown in Table 1 are as follows.
- Styrene macromer: "AS-6(S)" available from Toagosei Co., Ltd.; concentration of active ingredients: 50% by mass; number-average molecular weight: 6000
- M-40G: Methoxy polyethylene glycol monomethacrylate; "NK ESTER M-40G" available from Shin-Nakamura Chemical Co., Ltd.; average molar number of addition of ethyleneoxide: 4; end group: methoxy group

**TABLE 1**

| | | Initially charged monomer solution (part(s)) | Dropping monomer solution 1 (part(s)) | Dropping monomer solution 2 (part(s)) |
|---|---|---|---|---|
| (p-1) Carboxy group-containing vinyl monomer | Methacrylic acid | - | 51.2 | 12.8 |
| (p-2) Hydrophobic vinyl monomer | Styrene | 17.6 | 140.8 | 17.6 |
| | Styrene macromer | 12.0 | 108.0 | - |
| (p-3) Hydrophilic nonionic monomer | "NK ESTER M-40G" | 10.0 | 80.0 | 10.0 |
| Solvent | Methyl ethyl ketone | 6.0 | 66.0 | 48.0 |
| Polymerization initiator | V-65 | - | 3.2 | 0.8 |
| Polymerization chain transfer agent | 2-Mercaptoethanol | 0.08 | 0.56 | 0.16 |

### Production Example 2 (Production of Water Dispersion of Carbon Black-Containing Water-Insoluble Polymer Particles)

(1) The water-insoluble polymer p solution (solid content: 40.8%) obtained in Production Example 1 was weighed in an amount of 157.6 g and mixed with 60.4 g of methyl ethyl ketone (MEK), thereby obtaining an MEK solution of the water-insoluble polymer p. The resulting MEK solution of the water-insoluble polymer p was charged into a 2 L-capacity disper, and while stirring the solution at 1400 rpm, 448.3 g of ion-exchanged water, 19.5 g of a 5N sodium hydroxide aqueous solution and 1.5 g of a 25% ammonia aqueous solution were added thereto such that the degree of neutralization of the water-insoluble polymer by sodium hydroxide was adjusted to 85% and the degree of neutralization of the water-insoluble polymer by ammonia was adjusted to 40%. The resulting reaction solution was stirred at 1400 rpm for 15 minutes while cooling the solution in a water bath at 0°C. Then, 150 g of a pigment "MONARCH 717" (carbon black) available from Cabot Corporation was added to the reaction solution, and the resulting mixture was stirred at 7000 rpm for 3 hours. The obtained pigment mixture was subjected to dispersion treatment under a pressure of 150 MPa by passing through a Microfluidizer "M-110EH-30XP" available from Microfluidics Corporation 20 times, thereby obtaining a dispersion treatment product. The resulting dispersion treatment product had a solid content of 21.0% by mass.
(2) A 2 L eggplant-shaped flask was charged with 1000 g of the dispersion treatment product obtained in the above step, and then 400 g of ion-exchanged water was added thereto (solid content: 15.0% by mass), and the resulting mixture was maintained under a pressure of 0.09 MPa in a warm water bath adjusted at 32°C for 3 hours using a rotary distillation apparatus "Rotary Evaporator N-1000S" available from Tokyo Rikakikai Co., Ltd., operated at a rotating speed of 50 rpm to thereby remove the organic solvent therefrom. Furthermore, the temperature of the warm water bath was adjusted to 62°C, and the pressure was reduced to 0.07 MPa, and the reaction solution was concentrated under this condition until reaching a solid content of 25.0% by mass.
(3) The thus obtained concentrated solution was charged into a 500 mL angle rotor, and subjected to centrifugal separation using a high-speed cooling centrifuge "himac CR22G" (temperature set: 20°C) available from Hitachi Koki Co., Ltd., at 7000 rpm for 20 minutes. Thereafter, the resulting liquid layer portion was subjected to filtration treatment through a 5 µm membrane filter "Minisart" available from Sartorius Inc.

Then, 44.56 g of ion-exchanged water was added to 400 g of the resulting filtrate (carbon black: 68.6 g; water-insoluble polymer p: 29.4 g). In addition, 0.89 g of "Ploxel LVS" (mildew-proof agent; active ingredient content: 20%;) available from Arch Chemicals Japan, Inc., was added to the reaction solution, followed by stirring the resulting mixture at 70°C or 1 hour. The obtained mixture was cooled to 25°C and then subjected to filtration treatment through the above 5 µm filter, and further ion-exchanged water was added to the resulting reaction product to control a solid content thereof to 22.0% by mass, thereby obtaining a water dispersion of the pigment-containing water-insoluble polymer p.

The average particle size of the pigment-containing water-insoluble polymer particles P contained in the resulting water dispersion was 90 nm.

### Production Example 3 (Production of Water-Insoluble Polymer Particles Q)

A reaction vessel equipped with a dropping funnel was charged with 0.5 g of methacrylic acid, 14.5 g of methyl methacrylate, 5.0 g of 2-ethylhexyl acrylate, 11.1 g of "LATEMUL E-118B" (sodium polyoxyethylenealkylethersulfate; surfactant) available from Kao Corporation, 0.2 g of potassium persulfate as a polymerization initiator available from FUJIFILM Wako Pure Chemical Corporation and 282.8 g of ion-exchanged water, followed by mixing the contents of the reaction vessel with each other, and then an inside atmosphere of the reaction vessel was replaced with nitrogen gas, thereby obtaining an initially charged monomer solution. On the other hand, 9.5 g of methacrylic acid, 275.5 g of methyl methacrylate, 95.0 g of 2-ethylhexyl acrylate, 35.1 g of "LATEMUL E-118B", 0.6 g of potassium persulfate and 183.0 g of ion-exchanged water were mixed with each other to obtain a dropping monomer solution. The resulting dropping monomer solution was charged into the dropping funnel, and an inside atmosphere of the dropping funnel was replaced with nitrogen gas.

In a nitrogen atmosphere, the initially charged monomer solution in the reaction vessel was heated from room temperature to 80°C while stirring over 30 minutes, and while maintaining the solution in the reaction vessel at 80°C, the dropping monomer solution in the dropping funnel was gradually added dropwise to the reaction vessel over 3 hours. After completion of the dropwise addition, the obtained mixed solution in the reaction vessel was stirred for 1 hour while maintaining the temperature of the solution in the reaction vessel. Next, the resulting reaction solution was subjected to filtration treatment using a 200-mesh filter, thereby obtaining water-insoluble polymer particles Q (average particle size: 100 nm).

### Example 1 (Production of Water-Based Ink)

Using the water dispersion of the carbon black-containing water-insoluble polymer particles obtained in Production Example 2, the following composition A was formulated such that the content of the pigment in the resulting ink was 4.0% by mass. The resulting mixed solution was subjected to filtration treatment using the aforementioned 5 µm filter, thereby obtaining a water-based ink. The results are shown in Table 2.

### [Composition A]

| | |
|---|---|
| Carbon black-containing water dispersion (solid content: 22% by mass) | 26.0 g |
| Propylene glycol available from FUJIFILM Wako Pure Chemical Corporation | 40.0 g |
| "SURFYNOL 104PG-50" (acetylene glycol having an average molar number of addition of oxyethylene of 0; "SURFYNOL 104" (50%) and propylene glycol (50%); active ingredient content: 50%) available from Nissin Chemical Co., Ltd. | 0.6 g |
| "SURFYNOL 465" (acetylene glycol having an average molar number of | |
| addition of oxyethylene of 10 mol) available from Nissin Chemical Co., Ltd. | 1.0 g |

Furthermore, 32.4 g of ion-exchanged water was added to the aforementioned components so as to adjust a total amount of the obtained solution to 100 g.

The details of the organic solvent (C) and the acetylene glycol compound (D) shown in Tables 2 to 4 are as follows. Meanwhile, the amount of propylene glycol contained in "SURFYNOL 104PG-50" is included in the amounts of propylene glycol contained in the respective organic solvents (C) shown in Tables 2 to 4.

### [Organic Solvent (C)]

- GLY: Glycerin (relative permittivity (εᵣ): 43.8; boiling point: 290°C) available from Kao Corporation
- EG: Ethylene glycol (relative permittivity (εᵣ): 38.7; boiling point: 197°C) available from FUJIFILM Wako Pure Chemical Corporation
- 1,3PDO: 1,3-Propanediol (relative permittivity (εᵣ): 37.9; boiling point: 210°C) available from FUJIFILM Wako Pure Chemical Corporation
- DEG: Diethylene glycol (relative permittivity (εᵣ): 34.4; boiling point: 244°C) available from FUJIFILM Wako Pure Chemical Corporation
- PG: Propylene glycol (relative permittivity (εᵣ): 29.9; boiling point: 188°C) available from FUJIFILM Wako Pure Chemical Corporation
- 1,5PeDO: 1,5-Pentanediol (relative permittivity (εᵣ): 28.2; boiling point: 242°C) available from FUJIFILM Wako Pure Chemical Corporation
- 3M-1,3-BDO: 3-Methyl-1,3-butanediol (relative permittivity (εᵣ): 26.8; boiling point: 203°C) available from FUJIFILM Wako Pure Chemical Corporation
- 1,2BDO: 1,2-Butanediol (relative permittivity (εᵣ): 25.7; boiling point: 193°C) available from FUJIFILM Wako Pure Chemical Corporation
- DPG: Dipropylene glycol (relative permittivity (εᵣ): 20.8; boiling point: 232°C) available from FUJIFILM Wako Pure Chemical Corporation

### (Acetylene Glycol Compound (D))

- S104: "SURFYNOL 104"; 2,4,7,9-tetramethyl-5-decyne-4,7-diol [adding "SURFYNOL 104PG50" (S 104 as an active ingredient: 50%)]
- S420: "SURFYNOL 420"; ethyleneoxide (20%) adduct of "SURFYNOL 104"; average molar number of addition of ethyleneoxide: 1.3
- S465: "SURFYNOL 465"; ethyleneoxide (65%) adduct of "SURFYNOL 104"; average molar number of addition of ethyleneoxide: 10

Meanwhile, "SURFYNOL" series products are available from Nissin Chemical Co., Ltd., and Air Products & Chemicals, Inc.

### Examples 2 to 17 and Comparative Examples 1 to 12 (Examples 14 and 16 are Reference Examples)

The same procedure as in Example 1 was repeated except that the formulation of the respective components was changed to those shown in Tables 2 and 3, thereby obtaining water-based inks. The results are shown in Tables 2 and 3.

### Example 18

The same procedure as in Example 1 was repeated except that the water-insoluble polymer particles Q obtained in Production Example 3 were added in such an amount that a content of the particles Q in the resulting ink was 2% by mass, thereby obtaining a water-based ink. The results are shown in Table 2.

### <Evaluation 1 of Ejection Stability>

Image printing was carried out on a versatile glossy coated paper "OK Topcoat Plus" (basis weight: 104.7 g/m²; water absorption: 4.9 g/m²) available from Oji Paper Co., Ltd., by the following ink-jet printing method using the respective water-based inks obtained above to thereby evaluate intermittent ejection properties and continuous ejection properties of the water-based inks.

### (Ink-Jet Printing Method)

The water-based ink A was loaded to a printing evaluation apparatus available from Trytech Co., Ltd., equipped with an ink-jet print head "KJ4B-HD06MHG-STDV" (piezoelectric type) available from Kyocera Corporation under the environmental conditions of a temperature of 25±1°C and a relative humidity of 30±5%.

The operating conditions of the apparatus were set to an applied head voltage of 26 V, a frequency of 20 kHz, an ejected ink droplet amount of 12 pL, a head temperature of 32°C, a resolution of 600 dpi, the number of ink shots for flushing before ejection of 200 shots, and a negative pressure of -4.0 kPa. The printing medium was fixed on a transporting table under reduced pressure such that a length direction of the printing medium was aligned with a transporting direction thereof.

A printing command was transmitted to the printing evaluation apparatus to print images having from Duty 0% to Duty 100% on the printing medium.

### (Intermittent Ejection Properties)

After carrying out the image printing using the aforementioned printing evaluation apparatus, the ink-jet printer was allowed to stand for 30 minutes without protecting an ink-jet nozzle face thereof. Then, a print check pattern that is capable of judging ejection or non-ejection of the ink from all of nozzles (2656 nozzles) was printed on a printing paper, and the number of missing nozzles (corresponding to the number of clogged nozzles from which the ink could not be normally ejected) was counted to evaluate intermittent ejection properties of the ink according to the following evaluation ratings. The less the number of the missing nozzles becomes, the more excellent the intermittent ejection properties of the ink is.

### (Evaluation Ratings)

5: No missing nozzles were present;
4: Number of missing nozzles was from 1 to 2;
3: Number of missing nozzles was from 3 to 5;
2: Number of missing nozzles was from 6 to 10; and
1: Number of missing nozzles was not less than 11.

### (Continuous Ejection Properties)

Duty 100% image with a length of 20 cm was continuously printed on 500 sheets of the aforementioned versatile glossy coated paper "OK Topcoat Plus" (corresponding to 100 m of a length of the printed portion). Then, a print check pattern that is capable of judging ejection or non-ejection of the ink from all of nozzles (2656 nozzles) was printed on a printing paper, and the number of missing nozzles (corresponding to the number of clogged nozzles from which the ink could not be normally ejected) was counted to evaluate continuous ejection properties of the ink according to the following evaluation ratings. The less the number of the missing nozzles becomes, the more excellent the continuous ejection properties of the ink is.

### (Evaluation Ratings)

5: No missing nozzles were present;
4: Number of missing nozzles was from 1 to 2;
3: Number of missing nozzles was from 3 to 5;
2: Number of missing nozzles was from 6 to 10; and
1: Number of missing nozzles was not less than 11.

**TABLE 2 (part 1 of 2)**

| | | | | Examples | | | | | | | | |
|---|---|---|---|---|---|---|---|---|---|---|---|---|
| | | | | 1 | 2 | 3 | 4 | 5 | 6 | 7 | 8 | 9 |
| Ink composition (part(s) by mass) | Pigment (A) | | | 4.0 | 4.0 | 4.0 | 4.0 | 4.0 | 4.0 | 4.0 | 4.0 | 4.0 |
| | Carboxy group-containing polymer (B) | Pigment-containing polymer | | 1.7 | 1.7 | 1.7 | 1.7 | 1.7 | 1.7 | 1.7 | 1.7 | 1.7 |
| | | Water-insoluble polymer particles Q | | - | - | - | - | - | - | - | - | - |
| | Organic solvent (C) | GLY | εᵣ: 43.8 | | | | | | | 5.0 | 11.0 | |
| | | 1,3 PDO | εᵣ: 37.9 | | | | | 40.0 | | | | |
| | | DEG | εᵣ: 34.4 | | | | 40.0 | | | | | |
| | | PG | εᵣ: 29.9 | 40.3 | 35.3 | 50.3 | 0.3 | 0.3 | 0.3 | 35.3 | 35.3 | 35.3 |
| | | 1,5 PeDO | εᵣ: 28.2 | | | | | | 40.0 | | | |
| | | DPG | εᵣ: 20.8 | | | | | | | | | 5.0 |
| | Acetylene glycol (D) | S104 (d-2) | EO: 0 mol | 0.3 | 0.3 | 0.3 | 0.3 | 0.3 | 0.3 | 0.3 | 0.3 | 0.3 |
| | | S420 (d-2) | EO: 1.3 mol | | | | | | | | | |
| | | S465 (d-1) | EO: 10 mol | 1.0 | 1.0 | 1.0 | 1.0 | 1.0 | 1.0 | 1.0 | 1.0 | 1.0 |
| | Water | | | 52.7 | 57.7 | 42.7 | 52.7 | 52.7 | 52.7 | 52.7 | 46.7 | 52.7 |
| | Mass ratio [(c-1)/(C)] | | | 1.0 | 1.0 | 1.0 | 1.0 | 1.0 | 1.0 | 0.88 | 0.76 | 0.88 |
| | Mass ratio [(d-1)/(d-2)] | | | 3.3 | 3.3 | 3.3 | 3.3 | 3.3 | 3.3 | 3.3 | 3.3 | 3.3 |
| | Mass ratio [(c-1)/(D)] | | | 31.0 | 27.2 | 38.7 | 31.0 | 31.0 | 31.0 | 27.2 | 27.2 | 27.2 |
| Results | Intermittent ejection properties | | | 5 | 5 | 4 | 5 | 4 | 4 | 4 | 4 | 4 |
| | Continuous ejection properties | | | 5 | 4 | 4 | 5 | 5 | 5 | 5 | 5 | 5 |

**TABLE 2 (part 2 of 2)**

| | | | | Examples | | | | | | | | |
|---|---|---|---|---|---|---|---|---|---|---|---|---|
| | | | | 10 | 11 | 12 | 13 | 14 (Ref) | 15 | 16 (Ref) | 17 | 18 |
| Ink composition (part(s) by mass) | Pigment (A) | | | 4.0 | 4.0 | 4.0 | 4.0 | 4.0 | 4.0 | 4.0 | 4.0 | 4.0 |
| | Carboxy group-containing polymer (B) | Pigment-containing polymer | | 1.7 | 1.7 | 1.7 | 1.7 | 1.7 | 1.7 | 1.7 | 1.7 | 1.7 |
| | | Water-insoluble polymer particles Q | | - | - | - | - | - | - | - | - | 2 |
| | Organic solvent (C) | GLY | εᵣ: 43.8 | | | | | | | | | |
| | | 1,3 PDO | εᵣ: 37.9 | | | | | | | | | |
| | | DEG | εᵣ: 34.4 | | | | | | | | | |
| | | PG | εᵣ: 29.9 | 35.3 | 40.1 | 40.1 | 40.1 | 40.0 | 41.0 | 41.5 | 40.0 | 40.3 |
| | | 1,5 PeDO | εᵣ: 28.2 | | | | | | | | | |
| | | DPG | εᵣ: 20.8 | 11.0 | | | | | | | | |
| | Acetylene glycol (D) | S104 (d-2) | EO: 0 mol | 0.3 | 0.1 | 0.08 | 0.05 | 0.04 | 1.0 | 1.5 | | 0.3 |
| | | S420 (d-2) | EO: 1.3 mol | | | | | | | | 1.0 | |
| | | S465 (d-1) | EO: 10 mol | 1.0 | 1.0 | 1.0 | 1.0 | 1.0 | 1.0 | 1.0 | 1.0 | 1.0 |
| | Water | | | 46.7 | 53.1 | 53.1 | 53.2 | 53.2 | 51.3 | 50.3 | 52.3 | 50.7 |
| | Mass ratio [(c-1)/(C)] | | | 0.76 | 1.0 | 1.0 | 1.0 | 1.0 | 1.0 | 1.0 | 1.0 | 1.0 |
| | Mass ratio [(d-1)/(d-2)] | | | 3.3 | 10.0 | 12.5 | 20.0 | 25.0 | 1.0 | 0.7 | 1.0 | 3.3 |
| | Mass ratio [(c-1)/(D)] | | | 27.2 | 36.5 | 37.1 | 38.1 | 38.5 | 20.5 | 16.6 | 20.0 | 31.0 |
| Results | Intermittent ejection properties | | | 4 | 5 | 5 | 5 | 5 | 5 | 4 | 5 | 4 |
| | Continuous ejection properties | | | 5 | 5 | 5 | 5 | 4 | 5 | 4 | 5 | 4 |

**TABLE 3**

| | | | | Comparative Examples | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| Ink composition (part(s) by mass) | Pigment (A) | | | 4.0 | 4.0 | 4.0 | 4.0 | 4.0 | 4.0 | 4.0 | 4.0 | 4.0 | 4.0 | 4.0 | 4.0 |
| | Carboxy group-containing polymer (B) | Pigment-containing polymer | | 1.7 | 1.7 | 1.7 | 1.7 | 1.7 | 1.7 | 1.7 | 1.7 | 1.7 | 1.7 | 1.7 | 1.7 |
| | | Water-insoluble polymer particles Q | | - | - | - | - | - | - | - | - | - | - | - | - |
| | Organic solvent (C) | GLY | εᵣ: 43.8 | | | | 40.0 | | | | 15.0 | | | 40.0 | |
| | | EG | εᵣ: 38.7 | | | 40.0 | | | | | | | | | |
| | | PG | εᵣ: 29.9 | 20.3 | 60.3 | 0.3 | 0.3 | 0.3 | 0.3 | 0.3 | 35.3 | 35.3 | 41.3 | | |
| | | 3M-1,3-BDO | εᵣ: 26.8 | | | | | 40.0 | | | | | | | |
| | | 1,2 BDO | εᵣ: 25.7 | | | | | | 40.0 | | | | | | |
| | | DPG | εᵣ: 20.8 | | | | | | | 40.0 | | 15.0 | | | 40.0 |
| | Acetylene glycol (D) | S104 (d-2) | EO: 0 mol | 0.3 | 0.3 | 0.3 | 0.3 | 0.3 | 0.3 | 0.3 | 0.3 | 0.3 | 1.3 | 0.3 | 0.3 |
| | | S465 (d-1) | EO: 10 mol | 1.0 | 1.0 | 1.0 | 1.0 | 1.0 | 1.0 | 1.0 | 1.0 | 1.0 | - | 1.0 | 1.0 |
| | Water | | | 72.7 | 32.7 | 52.7 | 52.7 | 52.7 | 52.7 | 52.7 | 42.7 | 42.7 | 51.7 | 53.0 | 53.0 |
| | Mass ratio [(c-1)/(C)] | | | 1.0 | 1.0 | 0.01 | 0.01 | 0.01 | 0.01 | 0.01 | 0.70 | 0.70 | 1.0 | 0.00 | 0.00 |
| | Mass ratio [(d-1)/(d-2)] | | | 3.3 | 3.3 | 3.3 | 3.3 | 3.3 | 3.3 | 3.3 | 3.3 | 3.3 | - | 3.3 | 3.3 |
| | Mass ratio [(c-1)/(D)] | | | 15.6 | 46.4 | 0.2 | 0.2 | 0.2 | 0.2 | 0.2 | 27.2 | 27.2 | 31.8 | 0.0 | 0.0 |
| Results | Intermittent ejection properties | | | 4 | 4 | 3 | 2 | 3 | 3 | 2 | 3 | 3 | 3 | 2 | 2 |
| | Continuous ejection properties | | | 3 | 3 | 4 | 4 | 4 | 3 | 3 | 4 | 4 | 3 | 4 | 3 |

### Examples 19 and 20 and Comparative Examples 13 and 14

The same procedure as in Example 1 was repeated except that the formulation of the respective components was changed to those shown in Table 4, thereby obtaining water-based inks.

### <Evaluation 2 of Ejection Stability>

The same procedure as in the aforementioned "Evaluation 1 of Ejection Stability" was repeated except that the amount of a droplet of the respective water-based inks ejected was changed, to thereby evaluate intermittent ejection properties and continuous ejection properties of the inks. The results are shown in Table 4.

**TABLE 4**

| | | | | | Ex. | Com. Ex. | Ex. | Com. Ex. | Ex. | Com. Ex. |
|---|---|---|---|---|---|---|---|---|---|---|
| | | | | | 1 | 7 | 19 | 13 | 20 | 14 |
| Ink composition (part(s) by mass) | | Pigment (A) | | | 4.0 | 4.0 | 4.0 | 4.0 | 4.0 | 4.0 |
| | | Carboxy group-containing polymer (B) | Pigment-containing polymer | | 1.7 | 1.7 | 1.7 | 1.7 | 1.7 | 1.7 |
| | | | Water-insoluble polymer particles Q | | - | - | - | - | - | - |
| | | Organic solvent (C) | PG | εᵣ: 29.9 | 40.3 | 0.3 | 40.3 | 0.3 | 40.3 | 0.3 |
| | | | DPG | εᵣ: 20.8 | - | 40.0 | - | 40.0 | - | 40.0 |
| | | Acetylene glycol (D) | S104 (d-2) | EO: 0 mol | 0.3 | 0.3 | 0.3 | 0.3 | 0.3 | 0.3 |
| | | | S465 (d-1) | EO: 10 mol | 1.0 | 1.0 | 1.0 | 1.0 | 1.0 | 1.0 |
| | | Water | | | 52.7 | 52.7 | 52.7 | 52.7 | 52.7 | 52.7 |
| | | Mass ratio [(c-1)/(C)] | | | 1.0 | 0.01 | 1.0 | 0.01 | 1.0 | 0.01 |
| | | Mass ratio [(d-1)/(d-2)] | | | 3.3 | 3.3 | 3.3 | 3.3 | 3.3 | 3.3 |
| | | Mass ratio [(c-1)/(D)] | | | 31.0 | 0.2 | 31.0 | 0.2 | 31.0 | 0.2 |
| Amount of droplet of ink (pL/drop) | | | | | 12 | 12 | 5 | 5 | 3 | 3 |
| Results | Intermittent ejection properties | | | | 5 | 2 | 5 | 1 | 4 | 1 |
| | Continuous ejection properties | | | | 5 | 3 | 5 | 2 | 5 | 1 |

From Tables 2 to 4, it was confirmed that the inks obtained in Examples 1 to 20 were excellent in ejection stability (intermittent ejection properties and continuous ejection properties) as compared to the inks obtained in Comparative Examples 1 to 14.

### INDUSTRIAL APPLICABILITY

In accordance with the present invention, it is possible to provide a water-based ink for ink-jet printing which is excellent in ejection stability when used in an ink-jet printing method, as well as an ink-jet printing method using the water-based ink.

## Claims

1. A water-based ink for ink-jet printing, comprising a pigment (A), a carboxy group-containing polymer (B), an organic solvent (C), an acetylene glycol compound (D) and water, in which:
the organic solvent (C) comprises an organic solvent (c-1) having a relative permittivity (εᵣ) of not less than 27 and not more than 38 as measured at 23°C;
a content of the organic solvent (C) in the water-based ink is not less than 37% by mass and not more than 55% by mass;
a content of the organic solvent (c-1) in the water-based ink is not less than 33% by mass and not more than 55% by mass;
a mass ratio of the organic solvent (c-1) to the organic solvent (C) [organic solvent (c-1)/organic solvent (C)] is not less than 0.75;
the acetylene glycol compound (D) comprises an acetylene glycol (d-1) having an average molar degree of ethoxylation of not less than 4 mol and not more than 15 mol, and an acetylene glycol (d-2) having an average molar degree of ethoxylation of less than 4 mol;
a mass ratio of the acetylene glycol (d-1) to the acetylene glycol (d-2) [acetylene glycol (d-1)/acetylene glycol (d-2)] is not less than 1 and not more than 23; and
a mass ratio of the organic solvent (c-1) to the acetylene glycol compound (D) [organic solvent (c-1)/acetylene glycol compound (D)] is not less than 20 and not more than 40.

2. The water-based ink for ink-jet printing according to claim 1, wherein the organic solvent (c-1) comprises a glycol.

3. The water-based ink for ink-jet printing according to claim 1 or 2, wherein a content of the organic solvent (C) in the water-based ink is not less than 33% by mass and not more than 60% by mass.

4. The water-based ink for ink-jet printing according to any one of claims 1 to 3, wherein a content of the acetylene glycol compound (D) in the water-based ink is not less than 0.5% by mass and not more than 3% by mass.

5. The water-based ink for ink-jet printing according to any one of claims 1 to 4, wherein the carboxy group-containing polymer (B) comprises a constitutional unit derived from at least one compound selected from the group consisting of acrylic acid and methacrylic acid.

6. The water-based ink for ink-jet printing according to any one of claims 1 to 5, further comprising pigment-free water-insoluble polymer particles, in which a content of the pigment-free water-insoluble polymer particles in the water-based ink is not more than 4% by mass.

7. The water-based ink for ink-jet printing according to any one of claims 1 to 6, wherein a content of water in the water-based ink is not less than 35% by mass and not more than 60% by mass.

8. The water-based ink for ink-jet printing according to any one of claims 1 to 7, wherein the organic solvent (c-1) is at least one compound selected from the group consisting of propylene glycol, 1,3-propanediol, 1,5-pentanediol and diethylene glycol.

9. The water-based ink for ink-jet printing according to any one of claims 1 to 8, wherein the acetylene glycol (d-1) is at least one compound selected from the group consisting of an EO adduct of 2,4,7,9-tetramethyl-5-decyne-4,7-diol, an EO adduct of 3,6-dimethyl-4-octyne-3,6-diol, 2,5-dimethyl-3-hexyne-2,5-diol, and an EO adduct of 2,5,8,11-tetramethyl-6-dodecyne-5,8-diol.

10. The water-based ink for ink-jet printing according to any one of claims 1 to 9, wherein the acetylene glycol (d-2) is at least one compound selected from the group consisting of 2,4,7,9-tetramethyl-5-decyne-4,7-diol, 3,6-dimethyl-4-octyne-3,6-diol, 2,5-dimethyl-3-hexyne-2,5-diol, 2,5,8,11-tetramethyl-6-dodecyne-5,8-diol, and EO adducts of these compounds.

11. The water-based ink for ink-jet printing according to any one of claims 1 to 10, wherein a content of the acetylene glycol (d-1) in the water-based ink is not less than 0.8% by mass and not more than 2% by mass, and a content of the acetylene glycol (d-2) in the water-based ink is not less than 0.05% by mass and not more than 1% by mass.

12. An ink-jet printing method comprising the step of printing characters or images on a printing medium using the water-based ink according to any one of claims 1 to 11, in which an amount of a droplet of the water-based ink ejected is not less than 2 pL and not more than 20 pL.

13. A use of the water-based ink according to any one of claims 1 to 11 as an ink for ink-jet printing.

## Patentansprüche

1. Tinte auf Wasserbasis für den Tintenstrahldruck, die ein Pigment (A), ein Carboxygruppen-haltiges Polymer (B), ein organisches Lösungsmittel (C), eine Acetylenglykolverbindung (D) und Wasser umfasst, wobei:
das organische Lösungsmittel (C) ein organisches Lösungsmittel (c-1) mit einer relativen Dielektrizitätskonstante (εᵣ) von nicht weniger als 27 und nicht mehr als 38, gemessen bei 23°C, umfasst;
ein Gehalt des organischen Lösungsmittels (C) in der Tinte auf Wasserbasis nicht weniger als 37 Massen-% und nicht mehr als 55 Massen-% beträgt;
ein Gehalt des organischen Lösungsmittels (c-1) in der Tinte auf Wasserbasis nicht weniger als 33 Massen-% und nicht mehr als 55 Massen-%beträgt;
ein Massenverhältnis des organischen Lösungsmittels (c-1) zu dem organischen Lösungsmittel (C) [organisches Lösungsmittel (c-1)/organisches Lösungsmittel (C)] nicht weniger als 0,75 beträgt;
die Acetylenglykolverbindung (D) ein Acetylenglykol (d-1) mit einem durchschnittlichen molaren Ethoxylierungsgrad von nicht weniger als 4 Mol und nicht mehr als 15 Mol und ein Acetylenglykol (d-2) mit einem durchschnittlichen molaren Ethoxylierungsgrad von weniger als 4 Mol umfasst;
ein Massenverhältnis des Acetylenglykols (d-1) zu dem Acetylenglykol (d-2) [Acetylenglykol (d-1)/Acetylenglykol (d-2)] nicht weniger als 1 und nicht mehr als 23 beträgt; und
ein Massenverhältnis des organischen Lösungsmittels (c-1) zu der Acetylenglykolverbindung (D) [organisches Lösungsmittel (c-1)/Acetylenglykolverbindung (D)] nicht weniger als 20 und nicht mehr als 40 beträgt.

2. Tinte auf Wasserbasis für den Tintenstrahldruck gemäß Anspruch 1, wobei das organische Lösungsmittel (c-1) ein Glykol umfasst.

3. Tinte auf Wasserbasis für den Tintenstrahldruck gemäß Anspruch 1 oder 2, wobei ein Gehalt des organischen Lösungsmittels (C) in der Tinte auf Wasserbasis nicht weniger als 33 Massen-% und nicht mehr als 60 Massen-% beträgt.

4. Tinte auf Wasserbasis für den Tintenstrahldruck gemäß mindestens einem der Ansprüche 1 bis 3, wobei ein Gehalt der Acetylenglykolverbindung (D) in der Tinte auf Wasserbasis nicht weniger als 0,5 Massen-% und nicht mehr als 3 Massen-% beträgt.

5. Tinte auf Wasserbasis für den Tintenstrahldruck gemäß mindestens einem der Ansprüche 1 bis 4, wobei das Carboxygruppen-haltige Polymer (B) eine konstitutionelle Einheit umfasst, die von mindestens einer Verbindung, ausgewählt aus der Gruppe bestehend aus Acrylsäure und Methacrylsäure, abgeleitet ist.

6. Tinte auf Wasserbasis für den Tintenstrahldruck gemäß mindestens einem der Ansprüche 1 bis 5, die ferner pigmentfreie wasserunlösliche Polymerteilchen umfasst, wobei ein Gehalt der pigmentfreien wasserunlöslichen Polymerteilchen in der Tinte auf Wasserbasis nicht mehr als 4 Massen-% beträgt.

7. Tinte auf Wasserbasis für den Tintenstrahldruck gemäß mindestens einem der Ansprüche 1 bis 6, wobei ein Gehalt an Wasser in der Tinte auf Wasserbasis nicht weniger als 35 Massen-% und nicht mehr als 60 Massen-% beträgt.

8. Tinte auf Wasserbasis für den Tintenstrahldruck gemäß mindestens einem der Ansprüche 1 bis 7, wobei das organische Lösungsmittel (c-1) mindestens eine Verbindung ist, ausgewählt aus der Gruppe bestehend aus Propylenglykol, 1,3-Propandiol, 1,5-Pentandiol und Diethylenglykol.

9. Tinte auf Wasserbasis für den Tintenstrahldruck gemäß mindestens einem der Ansprüche 1 bis 8, wobei das Acetylenglykol (d-1) mindestens eine Verbindung ist, ausgewählt aus der Gruppe bestehend aus einem EO-Addukt von 2,4,7,9-Tetramethyl-5-decyne-4,7-diol, einem EO-Addukt von 3,6-Dimethyl-4-octyne-3,6-diol, 2,5-Dimethyl-3-hexyne-2,5-diol und einem EO-Addukt von 2,5,8,11-Tetramethyl-6-dodecyne-5,8-diol.

10. Tinte auf Wasserbasis für den Tintenstrahldruck gemäß mindestens einem der Ansprüche 1 bis 9, wobei das Acetylenglykol (d-2) mindestens eine Verbindung ist, ausgewählt aus der Gruppe bestehend aus 2,4,7,9-Tetramethyl-5-decin-4,7-diol, 3,6-Dimethyl-4-octin-3,6-diol, 2,5-Dimethyl-3-hexin-2,5-diol, 2,5,8,11-Tetramethyl-6-dodezin-5,8-diol und EO-Addukten dieser Verbindungen.

11. Tinte auf Wasserbasis für den Tintenstrahldruck gemäß mindestens einem der Ansprüche 1 bis 10, wobei ein Gehalt des Acetylenglykols (d-1) in der Tinte auf Wasserbasis nicht weniger als 0,8 Massen-% und nicht mehr als 2 Massen-% beträgt, und ein Gehalt des Acetylenglykols (d-2) in der Tinte auf Wasserbasis nicht weniger als 0,05 Massen-% und nicht mehr als 1 Massen-% beträgt.

12. Tintenstrahldruckverfahren, das den Schritt des Druckens von Zeichen oder Bildern auf ein Druckmedium unter Verwendung der Tinte auf Wasserbasis gemäß mindestens einem der Ansprüche 1 bis 11 umfasst, wobei eine Menge eines ausgestoßenen Tröpfchens der Tinte auf Wasserbasis nicht weniger als 2 pL und nicht mehr als 20 pL beträgt.

13. Verwendung der Tinte auf Wasserbasis gemäß mindestens einem der Ansprüche 1 bis 11 als eine Tinte für den Tintenstrahldruck.

## Revendications

1. Encre à base d'eau pour impression à jet d'encre, comprenant un pigment (A), un polymère contenant un groupe carboxy (B), un solvant organique (C), un composé d'acétylène glycol (D) et de l'eau, dans laquelle :
le solvant organique (C) comprend un solvant organique (c-1) présentant une permittivité relative (εᵣ) non inférieure à 27 et non supérieure à 38, telle que mesurée à 23 °C ;
une teneur en solvant organique (C) dans l'encre à base d'eau n'est pas inférieure à 37 % en masse et n'est pas supérieure à 55 % en masse ;
une teneur en solvant organique (c-1) dans l'encre à base d'eau n'est pas inférieure à 33 % en masse et n'est pas supérieure à 55 % en masse ;
un rapport de masse du solvant organique (c-1) sur le solvant organique (C) [solvant organique (c-1)/solvant organique (C)] n'est pas inférieur à 0,75 ;
le composé d'acétylène glycol (D) comprend un acétylène glycol (d-1) présentant un nombre molaire moyen d'éthoxylation qui n'est pas inférieur à 4 mol et n'est pas supérieur à 15 mol, et un acétylène glycol (d-2) présentant un nombre molaire moyen d'éthoxylation qui est inférieur à 4 mol ;
un rapport de masse de l'acétylène glycol (d-1) sur l'acétylène glycol (d-2) [acétylène glycol (d-1)/acétylène glycol (d-2)] n'est pas inférieur à 1 et n'est pas supérieur à 23 ; et
un rapport de masse du solvant organique (c-1) sur le composé d'acétylène glycol (D) [solvant organique (c-1)/composé d'acétylène glycol (D)] n'est pas inférieur à 20 et n'est pas supérieur à 40.

2. Encre à base d'eau pour impression à jet d'encre selon la revendication 1, dans laquelle le solvant organique (c-1) comprend un glycol.

3. Encre à base d'eau pour impression à jet d'encre selon la revendication 1 ou 2, dans laquelle une teneur en solvant organique (C) dans l'encre à base d'eau n'est pas inférieure à 33 % en masse et n'est pas supérieure à 60 % en masse.

4. Encre à base d'eau pour impression à jet d'encre selon l'une quelconque des revendications 1 à 3, dans laquelle une teneur en composé d'acétylène glycol (D) dans l'encre à base d'eau n'est pas inférieure à 0,5 % en masse et n'est pas supérieure à 3 % en masse.

5. Encre à base d'eau pour impression à jet d'encre selon l'une quelconque des revendications 1 à 4, dans laquelle le polymère contenant un groupe carboxy (B) comprend une unité constitutionnelle dérivée d'au moins un composé choisi dans le groupe constitué d'acide acrylique et d'acide méthacrylique.

6. Encre à base d'eau pour impression à jet d'encre selon l'une quelconque des revendications 1 à 5, comprenant en outre des particules de polymère insolubles dans l'eau sans pigment, dans laquelle une teneur en particules de polymère insolubles dans l'eau sans pigment dans l'encre à base d'eau n'est pas supérieure à 4 % en masse.

7. Encre à base d'eau pour impression à jet d'encre selon l'une quelconque des revendications 1 à 6, dans laquelle une teneur en eau dans l'encre à base d'eau n'est pas inférieure à 35 % en masse et n'est pas supérieure à 60 % en masse.

8. Encre à base d'eau pour impression à jet d'encre selon l'une quelconque des revendications 1 à 7, dans laquelle le solvant organique (c-1) est au moins un composé choisi dans le groupe constitué de propylène glycol, 1,3-propanediol, 1,5-pentanediol et diéthylène glycol.

9. Encre à base d'eau pour impression à jet d'encre selon l'une quelconque des revendications 1 à 8, dans laquelle l'acétylène glycol (d-1) est au moins un composé choisi dans le groupe constitué d'un adduit d'EO de 2,4,7,9-tétraméthyl-5-décyne-4,7-diol, d'un adduit d'EO de 3,6-diméthyl-4-octyne-3,6-diol, 2,5-diméthyl-3-hexyne-2,5-diol, et d'un adduit d'EO de 2,5,8,11-tétraméthyl-6-dodécyne-5,8-diol.

10. Encre à base d'eau pour impression à jet d'encre selon l'une quelconque des revendications 1 à 9, dans laquelle l'acétylène glycol (d-2) est au moins un composé choisi dans le groupe constitué de 2,4,7,9-tétraméthyl-5-décyne-4,7-diol, 3,6-diméthyl-4-octyne-3,6-diol, 2,5-diméthyl-3-hexyne-2,5-diol, 2,5,8,11-tétraméthyl-6- dodécyne-5,8-diol et d'adduits O de ces composés.

11. Encre à base d'eau pour impression à jet d'encre selon l'une quelconque des revendications 1 à 10, dans laquelle une teneur en acétylène glycol (d-1) dans l'encre à base d'eau n'est pas inférieure à 0,8 % en masse et n'est pas supérieure à 2 % en masse, et une teneur en acétylène glycol (d-2) dans l'encre à base d'eau n'est pas inférieure à 0,05 % en masse et n'est pas supérieure à 1 % en masse.

12. Procédé d'impression à jet d'encre comprenant l'étape destinée à imprimer des caractères ou images sur un support d'impression en utilisant l'encre à base d'eau selon l'une quelconque des revendications 1 à 11, dans lequel une quantité d'une gouttelette de l'encre à base d'eau éjectée n'est pas inférieure à 2 pL et n'est pas supérieure à 20 pL.

13. Utilisation de l'encre à base d'eau selon l'une quelconque des revendications 1 à 11 en tant qu'encre pour impression à jet d'encre.
